# EUROPEAN PATENT APPLICATION

(11) **EP 4 539 373 A1**
(43) Date of publication of application: **16.04.2025**
(21) Application number: 23830011.5
(22) Date of filing: 16.06.2023
(51) Int. Cl.: H04L 1/1867

(54) **COMMUNICATION METHOD, TERMINAL DEVICE, NETWORK DEVICE AND COMMUNICATION SYSTEM**

(30) Priority: 27.06.2022 CN 202210745443; 21.07.2022 CN 202210872898
(71) Applicant: Huawei Technologies Co., Ltd., Shenzhen, Guangdong 518129 (CN)
(72) Inventor: HU, Shaoling, Shenzhen, Guangdong 518129 (CN); XU, Haibo, Shenzhen, Guangdong 518129 (CN); XUE, Lixia, Shenzhen, Guangdong 518129 (CN)
(74) Representative: Pfenning, Meinig & Partner mbB
(86) International application number: PCT/CN2023/100756
(87) International publication number: WO 2024/001831

(57) **Abstract**

This application provides a communication method, a terminal device, a network device, and a communication system. The method includes: A terminal device reports first indication information to a network device, where the first indication information indicates a sent second PDU set referenced by a to-be-sent first protocol data unit set PDU set; and the terminal device determines, based on at least one of a timeout status of a timer of the terminal device and a feedback status of the network device for the first indication information, whether the second PDU set is successfully uploaded. The second PDU set referenced by the to-be-sent first PDU set is indicated by reporting the indication information. After sending the indication information, the terminal device learns, based on the timeout status of the timer and/or the feedback status of the network device for the first indication information, whether the second PDU set is successfully uploaded, so that the terminal device determines to upload or discard the first PDU set.

## Description

This application claims priorities to Chinese Patent Application No. 202210745443.8, filed with the China National Intellectual Property Administration on June 27, 2022 and entitled "DATA TRANSMISSION METHOD, TERMINAL DEVICE, AND NETWORK DEVICE", and to Chinese Patent Application No. 202210872898.6, filed with the China National Intellectual Property Administration on July 21, 2022 and entitled "COMMUNICATION METHOD, TERMINAL DEVICE, NETWORK DEVICE, AND COMMUNICATION SYSTEM", both of which are incorporated herein by reference in their entireties.

### TECHNICAL FIELD

Embodiments of this application relate to the communication field, and specifically, to a communication method, a terminal device, a network device, and a communication system.

### BACKGROUND

Uplink scheduling performed by a network device on a terminal device is based on a scheduling request (scheduling request, SR) and a buffer status report (buffer status report, BSR) that are sent by the terminal device. The network device may learn, based on the SR, that the terminal device needs to perform transmission of uplink data, and may learn, based on the BSR, of an amount of data buffered in a buffer of the terminal device.

### SUMMARY

After receiving an uplink scheduling request, a network device schedules uplink data by using downlink control information (downlink control information, DCI). After receiving the scheduling DCI, a terminal device uploads the uplink data on a specified time-frequency resource. After receiving the uplink data, the network device does not immediately return an acknowledgment (acknowledgment, ACK) or a negative acknowledgment (negative acknowledgment, NACK) by using a HARQ at a MAC layer, to indicate whether the uplink data is successfully received. Therefore, the terminal device cannot instantly determine whether the uplink data is successfully uploaded. Consequently, the terminal device cannot determine a processing manner of data related to the uplink data. Further, uplink resources are not fully used, and a waste of the uplink resources is caused. For example, on the premise that the network device does not indicate the terminal device to perform retransmission of uplink data #1, the terminal device considers by default that the uplink data #1 is successfully uploaded. However, actually, the uplink data #1 is not successfully uploaded, and the network device does not indicate to perform retransmission of the uplink data #1 only when a quantity of retransmission times of the uplink data #1 reaches an upper limit. In addition, the terminal device considers by default that the uplink data #1 is successfully uploaded, so that the terminal device may continue to upload uplink data #2 related to the uplink data #1 (for example, decoding of the uplink data #2 needs to depend on the uplink data #1). In this case, uploading the uplink data #2 by the terminal device causes the waste of the uplink resources.

To resolve the foregoing technical problem, this application provides a communication method, so that the terminal device can determine whether the uplink data is successfully uploaded, to avoid the waste of the uplink resources caused by uploading the data when the data does not need to be uploaded.

According to a first aspect, a communication method is provided. The method may be performed by a terminal device, or may be performed by a component (for example, a chip or a circuit) of the terminal device. This is not limited in this application. For ease of description, the following uses an example in which the terminal device performs the method for description.

The communication method includes: A terminal device reports first indication information to a network device, where the first indication information indicates a second protocol data unit set (Protocol Data Unit set, PDU set) PDU set referenced (which may also be referred to as depended on) by a first PDU set; and the terminal device determines, based on at least one of a timeout status of a timer of the terminal device and a feedback status of the network device for the first indication information, whether the second PDU set is successfully uploaded. The first PDU set includes a PDU set to be sent by the terminal device, the second PDU set includes a PDU set that has been sent by the terminal device, and that the first PDU set references the second PDU set indicates that successful decoding of the first PDU set is premised on successful decoding of the second PDU set.

Based on the foregoing technical solution, the terminal device reports the indication information indicating the second PDU set that has been sent and that is referenced by the to-be-sent first PDU set, and after sending the first indication information, determines, based on at least one of the timeout status (for example, timing duration or whether the started timer expires) of the started timer and the feedback status (for example, delivering information in response to the first indication information) of the network device for the received first indication information, whether the second PDU set is successfully uploaded. In other words, according to the technical solution, the terminal device can determine whether the second PDU set is successfully uploaded.

In addition, in the technical solution, the terminal device can determine, based on a result of determining whether the second PDU set is successfully uploaded, processing on the first PDU set. For example, the second PDU set is not successfully uploaded, and the terminal device determines that the first PDU set does not need to be uploaded. Because the successful decoding of the first PDU set is premised on the successful decoding of the second PDU set, when the second PDU set is not successfully uploaded, decoding cannot be correctly performed even if the first PDU set is uploaded. Therefore, the first PDU set does not need to be uploaded, so that the terminal device can determine a processing manner of the first PDU set based on the determining result, to avoid a waste of uplink resources caused by uploading the first PDU set when the first PDU set does not need to be uploaded.

In some implementations of the first aspect, the first indication information includes a media access control control element (media access control control element, MAC CE), and the MAC CE includes a logical channel identifier LCID and an identifier of the second PDU set. The LCID indicates a logical channel corresponding to the MAC CE, and the logical channel is for transmission of the identifier of the second PDU set referenced by the first PDU set.

Based on the foregoing technical solution, a signaling format of the first indication information reported by the terminal device may be the MAC CE, and a signaling format defined in an existing protocol (for example, a format of the MAC CE defined in 3GPP TS 38.321) is still used, to avoid a case in which a function of the first indication information is implemented by using a newly defined signaling format, so that the solution is simplified.

In some implementations of the first aspect, when it is determined that the second PDU set is not successfully uploaded, the method further includes: The terminal device discards the first PDU set.

Based on the foregoing technical solution, when determining that the second PDU set is not successfully uploaded, the terminal device can determine that the first PDU set cannot be correctly parsed even if the first PDU set is uploaded. Therefore, the first PDU set does not need to be uploaded. Further, to save buffer space, the first PDU set may be discarded or deleted from a buffer.

In some implementations of the first aspect, that the terminal device discards the first PDU set includes: After a first timer expires or when a first timer expires, if the first PDU set is buffered in a buffer of the terminal device, the terminal device discards the first PDU set in the buffer. The first timer is a discard timer set by the terminal device for the first PDU set, a start moment of the first timer is a moment (which may also be referred to as a time point (time point)) at which a packet data convergence protocol (packet data convergence protocol, PDCP) entity of the terminal device receives a last bit of a last PDU in the first PDU set, timing duration of the first timer is less than a frame arrival periodicity, and the frame arrival periodicity indicates an interval between arrival of two adjacent frames at the buffer. The PDCP entity of the terminal device may be understood as a transmission entity (which may also be referred to as a transmitting PDCP entity) at a PDCP layer of the terminal device.

In some implementations of the first aspect, after the first timer expires or when the first timer expires (which may also be referred to as a time point (time point)), that the first PDU set is buffered in the buffer of the terminal device indicates that the second PDU set is not successfully uploaded.

In some implementations of the first aspect, when it is determined that the second PDU set is successfully uploaded, the method further includes: The terminal device discards a part of PDUs in the first PDU set; or the terminal device sends the first PDU set.

Based on the foregoing technical solution, when the terminal device determines that the second PDU set is successfully uploaded, the terminal device can indirectly learn that a PDU included in the first PDU set can be uploaded. However, a specific upload status needs to be determined based on scheduling of the network device. For example, the network device may successfully schedule only the part of PDUs in the first PDU set. For another example, the network device successfully schedules all PDUs in the first PDU set. In conclusion, when the terminal device determines that the second PDU set is successfully uploaded, subsequent processing on the first PDU set may be successfully sending the part of PDUs in the first PDU set or successfully sending all the PDUs in the first PDU set.

In some implementations of the first aspect, that the terminal device discards a part of PDUs in the first PDU set includes: Before a first timer expires, if the part of PDUs in the first PDU set are buffered in a buffer of the terminal device, the terminal device discards the part of PDUs in the first PDU set in the buffer. The first timer is a discard timer set by the terminal device for the first PDU set, and a start moment of the first timer is a moment at which a PDCP entity of the terminal device receives a last bit of a last PDU in the first PDU set.

In some implementations of the first aspect, the buffer of the terminal device includes a buffer at a radio link control (radio link control, RLC) layer of the terminal device or a buffer at a packet data convergence protocol (packet data convergence protocol, PDCP) layer of the terminal device. When the buffer of the terminal device is the buffer at the RLC layer, after or when the first timer expires, the PDCP layer of the terminal device notifies, by using a notification message, the RLC layer of the terminal device to discard a PDU set and/or a PDU in the buffer at the RLC layer.

Based on the foregoing technical solution, the buffer of the terminal device may be buffers at different protocol layers, so that flexibility of the solution is improved.

In some implementations of the first aspect, that the terminal device determines, based on a feedback status of the network device for the first indication information, that the second PDU set is not successfully uploaded includes: The terminal device receives second indication information from the network device, where the second indication information indicates that the second PDU set is not successfully uploaded.

In some implementations of the first aspect, that the second indication information indicates that the second PDU set is not successfully uploaded includes: The second indication information indicates that a part of PDUs included in the second PDU set are not successfully uploaded or no PDUs included in the second PDU set are successfully uploaded; or the second indication information indicates that a quantity of successfully uploaded PDUs in the second PDU set is less than or equal to a first threshold.

In some implementations of the first aspect, that the terminal device determines, based on a timeout status of a timer of the terminal device, that the second PDU set is not successfully uploaded includes: The terminal device starts a second timer when sending the first indication information, and if the second timer expires and the terminal device does not receive scheduling information from the network device, the terminal device determines that the second PDU set is not successfully uploaded.

In some implementations of the first aspect, before the terminal device sends the first indication information, the method further includes: The terminal device sends the second PDU set to the network device, where the second PDU set includes third indication information, and the third indication information is used by the network device to determine whether all PDUs in the second PDU set or a specified quantity of PDUs in the second PDU set are successfully received.

In some implementations of the first aspect, the third indication information includes at least one of the following: identifiers of a 1^{st} PDU and a last PDU included in the second PDU set, a total quantity of PDUs included in the second PDU set, a quantity of successfully communicated PDUs needed for the successful decoding of the second PDU set, a ratio of a quantity of successfully communicated PDUs needed for the successful decoding of the second PDU set to a total quantity of PDUs included in the second PDU set, an identifier indicating that a PDU included in the second PDU set belongs to the second PDU set, or a sequence number of a PDU included in the second PDU set in the second PDU set.

In some implementations of the first aspect, the method further includes: When (when) or after (after) receiving the first PDU set generated by an application layer of the terminal device, a protocol layer entity of the terminal device performs header detection on the first PDU set, to determine an identifier of the first PDU set and an identifier of at least one PDU set referenced by the first PDU set. A protocol layer of the terminal device encapsulates the identifier of the first PDU set and the identifier of the at least one PDU set into a header of the protocol layer of the first PDU set. The first PDU set generated by the application layer includes the identifier of the first PDU set and the identifier of the at least one referenced PDU set. Specifically, a 1^{st} PDU or each PDU in the first PDU set includes the identifier of the first PDU set and the identifier of the at least one referenced PDU set, and the second PDU set is one of the at least one PDU set.

Based on the foregoing technical solution, the terminal device may learn, through the header detection, of an identifier of a PDU set and an identifier of another PDU set referenced by the PDU set, so that the terminal device learns of a reference relationship between different PDU sets.

In some implementations of the first aspect, the protocol layer includes at least one of the following: a service data adaptation protocol (service data adaptation protocol, SDAP) layer, the PDCP layer, a non-access stratum (Non-Access Stratum, NAS), or a radio resource control (radio resource control, RRC) layer.

According to a second aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: A network device receives first indication information from a terminal device, where the first indication information indicates a second protocol data unit set PDU set referenced by a first PDU set. When the network device determines that not all PDUs needed for successful decoding of the second PDU set are successfully received, the network device determines not to schedule the first PDU set. The first PDU set includes a PDU set to be sent by the terminal device, the second PDU set includes a PDU set that is referenced by the first PDU set and that has been sent by the terminal device, and that the first PDU set references the second PDU set indicates that successful decoding of the first PDU set is premised on the successful decoding of the second PDU set. For descriptions of the first indication information, refer to the descriptions of the first indication information in the first aspect. Details are not described herein again.

In some implementations of the second aspect, when the network device determines that the second PDU set is successfully received, the network device schedules the first PDU set.

In some implementations of the second aspect, that the network device determines that not all PDUs needed for successful decoding of the second PDU set are successfully received includes: The network device determines that the network device does not store an identifier of the second PDU set.

In some implementations of the second aspect, the method further includes: The network device receives the second PDU set from the terminal device, where the second PDU set includes third indication information. The network device determines, based on the third indication information, whether to store the identifier of the second PDU set. For descriptions of the third indication information, refer to the descriptions of the third indication information in the first aspect. Details are not described herein again.

In some implementations of the second aspect, after the network device determines not to schedule the first PDU set, the method further includes: The network device sends second indication information to the terminal device, where the second indication information indicates that the network device does not successfully receive all the PDUs needed for the successful decoding of the second PDU set.

In some implementations of the second aspect, before the network device sends second indication information to the terminal device, the method further includes: The network device determines that timing duration of a first timer is greater than a frame arrival periodicity. The first timer is a discard timer set by the terminal device for the first PDU set, a start moment of the first timer is a moment at which a PDCP entity of the terminal device receives the first PDU set, and the frame arrival periodicity indicates an interval between arrival of two adjacent frames at a buffer of the terminal device.

In some implementations of the second aspect, that the second indication information indicates that the network device does not successfully receive all the PDUs needed for the successful decoding of the second PDU set includes: The second indication information includes an identifier of at least one PDU set, and indicates that the at least one PDU set is not successfully uploaded, and the second PDU set is one of the at least one PDU set.

For technical effects of the method shown in the second aspect and the possible designs of the second aspect, refer to the technical effects in the first aspect and the possible designs of the first aspect.

According to a third aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: A network device determines that a first condition is satisfied; and the network device sends fourth indication information to a terminal device, where the fourth indication information indicates a PDU that is successfully received by the network device and/or a PDU that is not successfully received by the network device. The first condition includes at least one of the following: a moment of sending the fourth indication information arrives on the premise that the fourth indication information is periodically sent, the network device determines whether a third PDU set is successfully received, or the network device receives trigger information from the terminal device. The trigger information is for triggering the network device to determine the fourth indication information.

Based on the foregoing technical solution, when the first condition is satisfied, the network device may notify, by using the fourth indication information, the terminal device of the successfully received PDU and/or the unsuccessfully received PDU, so that the terminal device determines whether uplink data is successfully uploaded.

In some implementations of the third aspect, that the network device determines whether a third PDU set is successfully received includes: The network device determines whether all PDUs included in the third PDU set are successfully received, and/or whether a quantity of PDUs that are successfully received by the network device exceeds a first threshold, and the received PDU successfully received by the network device is a PDU included in the third PDU set, where the first threshold is predefined.

In some implementations of the third aspect, when the first condition is that the network device determines whether the third PDU set is successfully received, the method further includes: The network device receives the third PDU set from the terminal device, where the third PDU set includes fifth indication information. The network device determines, based on the fifth indication information, whether all PDUs needed for successful decoding of the third PDU set are successfully received.

Based on the foregoing technical solution, when sending the uplink third PDU set, the terminal device may include the fifth indication information in the third PDU set, so that the network device determines, based on the fifth indication information, whether all the PDUs included in the third PDU set are successfully received.

In some implementations of the third aspect, the fifth indication information includes at least one of the following: identifiers of a 1^{st} PDU and a last PDU included in the third PDU set, a total quantity of PDUs included in the third PDU set, a quantity of successfully communicated PDUs needed for the successful decoding of the third PDU set, a ratio of a quantity of successfully communicated PDUs needed for the successful decoding of the third PDU set to a total quantity of PDUs included in the third PDU set, an identifier indicating that a PDU included in the third PDU set belongs to the third PDU set, or a sequence number of a PDU included in the third PDU set in the third PDU set.

In some implementations of the third aspect, that the network device determines, based on the fifth indication information, whether all PDUs included in the third PDU set are successfully received includes: The network device determines, based on the fifth indication information, that a part of PDUs in the third PDU set are received, and all the PDUs included in the third PDU set are not successfully received; and the method further includes: The network device deletes or discards the part of PDUs in the third PDU set.

Based on the foregoing technical solution, when the network device determines that all the PDUs included in the third PDU set are not successfully received, but the part of PDUs included in the third PDU set are received, the network device may discard the some received PDUs.

According to a fourth aspect, a communication method is provided. The method may be performed by a terminal device, or may be performed by a component (for example, a chip or a circuit) of the terminal device. This is not limited in this application. For ease of description, the following uses an example in which the terminal device performs the method for description.

The communication method includes: A terminal device receives fourth indication information from a network device, where the fourth indication information indicates a PDU that is successfully received by the network device and/or a PDU that is not successfully received by the network device. When the fourth indication information indicates the PDU that is not successfully received by the network device, the terminal device determines, based on the PDU that is not successfully received, to delete a first PDU. The PDU that is not successfully received is a PDU in a third PDU set, and the first PDU includes at least one of the following: a PDU included in a fourth PDU set, a PDU that is not communicated in the third PDU set, or a PDU included in a fifth PDU set. The fourth PDU set is a PDU set that references the third PDU set, the fifth PDU set is a PDU set that references the third PDU set and/or the fourth PDU set, that the fourth PDU set references the third PDU set indicates that successful decoding of the fourth PDU set is premised on successful decoding of the third PDU set, and that the fifth PDU set references the third PDU set and/or the fourth PDU set indicates that successful decoding of the fifth PDU set is premised on the successful decoding of the third PDU set and/or the fourth PDU set.

Based on the foregoing technical solution, the terminal device can determine, based on the received fourth indication information, that a part of PDUs are not successfully communicated. For example, the terminal device determines that a PDU #1 is not successfully communicated, and the PDU #1 is a PDU in a PDU set #1. Therefore, it is determined that the terminal device determines that a PDU set that references the PDU set #1 may not need to be uploaded, or another PDU in the PDU set #1 may not need to be uploaded, so that the terminal device discards the PDU set or the PDU that does not need to be uploaded. This saves a buffer and uplink resources of the terminal device.

In some implementations of the fourth aspect, before the terminal device receives third indication information from the network device, the method further includes: The terminal device sends the third PDU set to the network device, where the third PDU set includes fifth indication information, and the fifth indication information is provided for the network device, to be used as a basis for the network device to determine whether the third PDU set is successfully received. For descriptions of the fifth indication information, refer to the descriptions of the fifth indication information in the third aspect. Details are not described herein again.

In some implementations of the fourth aspect, the method further includes: Before or when the third PDU set is buffered into a buffer, the terminal device performs header detection on the third PDU set generated by an application layer, to determine an identifier of the third PDU set and an identifier of at least one PDU set referenced by the third PDU set. The terminal device encapsulates the identifier of the third PDU set and the identifier of the at least one PDU set into a header of a protocol layer of the third PDU set. The third PDU set generated by the application layer includes the identifier of the third PDU set and the identifier of the at least one PDU set. Specifically, a 1^{st} PDU or each PDU in the third PDU set includes the identifier of the third PDU set and the identifier of the at least one PDU set, and the successful decoding of the third PDU set is premised on successful decoding of the at least one PDU set.

Based on the foregoing technical solution, the terminal device may learn, through the header detection, of an identifier of a PDU set and an identifier of another PDU set referenced by the PDU set, so that the terminal device learns of a reference relationship between different PDU sets.

According to a fifth aspect, a terminal device is provided. The terminal device is configured to perform the method according to any one of the first aspect and the implementations of the first aspect, or any one of the fourth aspect and the implementations of the fourth aspect. Specifically, the terminal device includes a processor and a memory. The memory is configured to store a computer program. The processor is configured to invoke the computer program from the memory and run the computer program, so that the terminal device performs the method according to any one of the first aspect and the implementations of the first aspect, or any one of the fourth aspect and the implementations of the fourth aspect.

According to a sixth aspect, a network device is provided. The network device is configured to perform the method according to the second aspect or the third aspect. Specifically, the network device includes a processor and a memory. The memory is configured to store a computer program. The processor is configured to invoke the computer program from the memory and run the computer program, so that the network device performs the method according to any one of the second aspect and the implementations of the second aspect, or any one of the third aspect and the implementations of the third aspect.

According to a seventh aspect, a communication apparatus is provided. The communication apparatus is configured to perform the method according to any one of the first aspect and the implementations of the first aspect, or any one of the fourth aspect and the implementations of the fourth aspect. Specifically, the communication apparatus may include units and/or modules (for example, a processing unit and a transceiver unit) configured to perform the method according to any one of the first aspect and the implementations of the first aspect, or any one of the fourth aspect and the implementations of the fourth aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to an eighth aspect, a communication apparatus is provided. The communication apparatus is configured to perform the method according to any one of the second aspect and the implementations of the second aspect, or any one of the third aspect and the implementations of the third aspect. Specifically, the communication apparatus may include units and/or modules, for example, a processing unit and a transceiver unit, configured to perform the method according to any one of the second aspect and the implementations of the second aspect, or any one of the third aspect and the implementations of the third aspect.

In an implementation, the communication apparatus is a network device. When the communication apparatus is the network device, the transceiver unit may be a transceiver or an input/output interface, and the processing unit may be at least one processor. Optionally, the transceiver may be a transceiver circuit. Optionally, the input/output interface may be an input/output circuit.

In another implementation, when the communication apparatus is a chip, a chip system, or a circuit in a network device, the transceiver unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a ninth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable storage medium stores a computer program. When the computer program is run on a communication apparatus, the communication apparatus is enabled to perform the method according to any one of the implementations of the first aspect to the fourth aspect.

According to an eleventh aspect, a computer program product including instructions is provided. When the computer program product runs on a computer, the computer is enabled to perform the method according to any one of the implementations of the first aspect to the fourth aspect.

According to a twelfth aspect, a chip is provided. The chip includes a processor and a communication interface, and the processor reads, through the communication interface, instructions stored in a memory, to perform the method according to any one of the implementations of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations of the first aspect to the fourth aspect.

According to a thirteenth aspect, a communication system is provided, including the terminal device in the fifth aspect and the network device in the sixth aspect.

### BRIEF DESCRIPTION OF DRAWINGS

FIG. 1 is a diagram of a communication system applicable to this application;
FIG. 2 is a diagram of a protocol layer structure between a network device and a terminal device;
FIG. 3 is a schematic flowchart of a communication method according to this application;
   (a) to (d) in FIG. 4 are diagrams of determining, by a terminal device, whether a second PDU set is successfully uploaded according to embodiments of this application;
FIG. 5 is a schematic flowchart of another communication method according to this application;
FIG. 6 is a diagram of a communication apparatus according to this application;
FIG. 7 is a diagram of a structure of a terminal device according to this application;
FIG. 8 is a diagram of another communication apparatus according to this application; and
FIG. 9 is a diagram of a structure of a network device according to this application.

### DESCRIPTION OF EMBODIMENTS

The following describes technical solutions in embodiments of this application in detail with reference to accompanying drawings.

The technical solutions in embodiments of this application may be applied to various communication systems, for example, a 5th generation (5th generation, 5G) system or new radio (new radio, NR), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to a device-to-device (device-to-device, D2D) communication, a vehicle-to-everything (vehicle-to-everything, V2X) communication, a machine-to-machine (machine-to-machine, M2M) communication, a machine type communication (machine type communication, MTC), or an internet of things (internet of things, IoT) communication system, or another communication system.

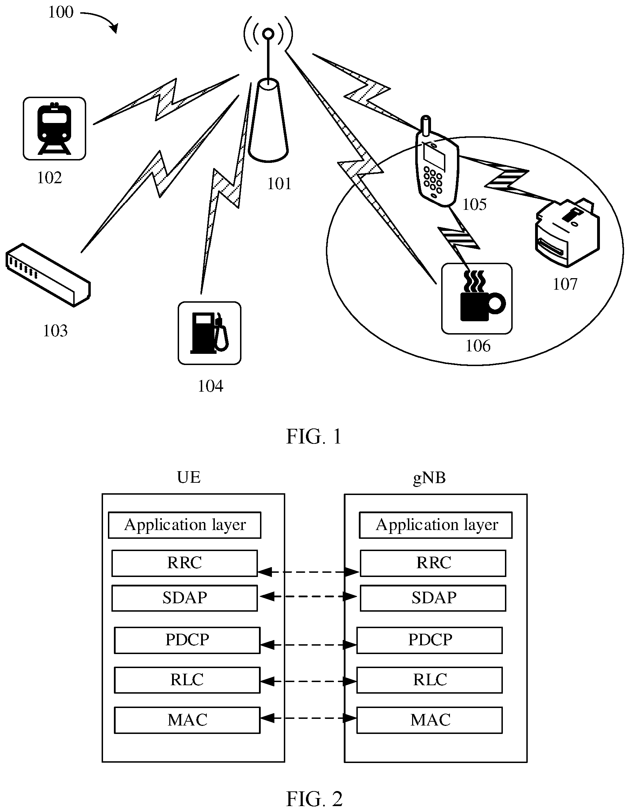

For ease of understanding embodiments of this application, for example, a communication system applicable to this application is first described with reference to FIG. 1. A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices that are intelligently designed and developed for daily wear by using a wearable technology, such as glasses, gloves, watches, clothes, and shoes. The wearable device is a portable device that is directly worn on a body or integrated into clothes or accessories of a user. The wearable device is not only a hardware device, but also implements a powerful function through software support, data exchange, and cloud interaction. In a broad sense, a wearable intelligent device includes a full-function device that can implement complete or some functions without depending on a smartphone, for example, a smart watch or smart glasses. In addition, the wearable intelligent device may also be a portable device that focuses only on a specific type of application function and needs to be used in cooperation with another device like a smartphone, for example, various smart bands and smart jewelry for physical sign monitoring.

In addition, in embodiments of this application, the terminal device may alternatively be a terminal device in an IoT system. The IoT is an important part in future development of information technologies. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include a sensor, and main functions include collecting data (some terminal devices), receiving control information and downlink data of a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (a TRP or a TP) in a 5G system, for example, an NR system, may be an antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

The network device and the terminal device may be deployed on land, including an indoor scenario or an outdoor scenario, and a handheld scenario or a vehicle-mounted scenario; or may be deployed on water; or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running on the hardware layer, and an application layer running on the operating system layer. The hardware layer includes hardware like a central processing unit (central processing unit, CPU), a memory management unit (memory management unit, MMU), and a memory (also referred to as a main memory). The operating system may be any one or more computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium includes but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

For ease of understanding embodiments of this application, a communication system shown in FIG. 1 is first used as an example to describe in detail a communication system applicable to embodiments of this application. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device-to-device (device-to-device, D2D) technology. As shown in FIG. 1, direct communication may be performed between terminal devices 105 and 106 and between terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 through the terminal device 105.

A plurality of antennas may be disposed for each communication device. For each communication device in the communication system 100, the disposed plurality of antennas may include at least one transmit antenna configured to send a signal and at least one receive antenna configured to receive a signal. Therefore, communication devices in the communication system 100 may communicate with each other by using a multi-antenna technology.

An interface between the network device and the terminal device may be a Uu interface (or referred to as an air interface). It is clear that in future communication, names of these interfaces may remain unchanged, or may be replaced by other names. This is not limited in this application. For example, communication between the network device and the terminal device complies with a specific protocol layer structure. Network layering means that work such as sending, forwarding, packaging, or unpacking data of a network node (for example, the network device and the terminal device), and loading or unpacking control information is respectively implemented by different hardware and software modules. In this way, a complex problem of communication and network interconnection can be simplified. For ease of understanding, the protocol layer structure between the network device and the terminal device in embodiments of this application is briefly described with reference to FIG. 2.

It can be learned from FIG. 2 that network layer division of the network device and the terminal device includes an application layer, an RRC layer, an SDAP layer, a PDCP layer, an RLC layer, and a MAC layer. A main function of the application layer is to provide a plurality of services, such as a file server, a database service, an email, and another network software service, for application software. Functions implemented by the RRC layer include establishing, maintaining, and releasing an RRC connection, and allocating or reconfiguring a radio resource used for the RRC connection. One of functions of the SDAP layer is mapping between a quality of service (Quality of Service) flow and a data radio bearer (data radio bearer, DRB). The PDCP layer is responsible for compressing and decompressing an IP header, maintaining a PDCP layer sequence number, performing encryption and decryption, and the like. The RLC layer mainly provides a radio link control function, and provides services such as segmentation, retransmission control, and on-demand sending for an upper layer. Functions of the MAC layer include mapping between logical channels and transport channels, and selecting an appropriate transport format for each transport channel.

It should be noted that the network layer division of the terminal device and the network device is not limited in embodiments of this application. FIG. 2 is merely an example, and does not constitute any limitation on the protection scope of this application.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to the core network device, the data received from the terminal device, or receive, from the core network device, the data that needs to be sent to the terminal device.

For ease of understanding of embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.

1. Extended reality (Extended Reality, XR): The extended reality includes virtual reality (Virtual Reality, VR), augmented reality (Augmented Reality, AR), mixed reality (Mixed Reality, MR), and the like, and is one of the most attractive applications for a future 5G network. An XR application provides a virtual immersive world for a user by providing audio and video signals. Video frame transmission is classified into I-frame (I-frame) transmission and P-frame (P-frame) transmission.

2. I-frame and P-frame: The I-frame may be referred to as an intra frame, is an independent frame that carries all information, and can be decoded independently without reference to another image. The P-frame may be referred to as a predicted frame. During encoding of consecutive dynamic images, the P-frame is predicted from a P-frame or an I-frame before the P-frame, and the P-frame is compared with the P-frame or the I-frame before the P-frame to obtain difference information or data. In other words, inter-frame compression is performed by considering a motion characteristic.

3. Protocol data unit (Protocol Data Unit, PDU): a specific data frame format indicates that a PDU is created at each layer of a transmission system in a hierarchical network structure. The PDU contains information from an upper layer and additional information from an entity at a current layer. The PDU is transmitted to a next lower layer.

4. Protocol data unit set (Protocol Data Unit set, PDU set): A PDU set includes one or more PDUs, and is information about a unit generated by an application layer. The information about the unit may refer to a frame (frame) or a slice (slice) in an XR media service.

In some applications, the application layer needs to receive all PDUs in a PDU set to use the information about the unit. In some other applications, the application layer can restore a part or all of the information about the unit by receiving only a part of a PDU set.

At the application layer, all the PDUs in the PDU set are processed as a whole. For example, a frame in a group of pictures (group of pictures, GoP) can be normally decoded only after all frames on which the frame depends are received and decoded. If the dependency between PDU sets is not considered, a randomly discarded data packet in a 5GS affects normal decoding of a subsequently communicated data packet, resulting in transmission of an invalid data packet and a radio waste.

5. PDU set sequence number (PDU set sequence number, PS-SN) and reference PDU set sequence number (reference PDU set sequence number, RPS-SN): To indicate a reference (or dependency) relationship between PDU sets, a PDU set may carry two sequence numbers: the PS-SN and the RPS-SN. If transmission of a reference PDU set is not successfully performed, transmission of a subsequent PDU set that depends on the reference PDU set may not need to be performed, to save radio resources.

For ease of description, a referenced PDU set may be referred to as a reference PDU set, and a PDU set that references the reference PDU set is referred to as a dependent PDU set.

6. New data indicator (new data indicator, NDI) field and quantity of hybrid automatic repeat request (hybrid automatic repeat request, HARQ) processes: A 1-bit NDI field and a 4-bit HARQ process number in DCI (for example, DCI format 0_0, 0_1, or 0_2) for scheduling uplink data indicate whether a network device is scheduling re-communicated data or scheduling newly communicated data.

The NDI and the HARQ process number indicate whether the uploaded data is newly communicated or re-communicated. For a same HARQ process number, if an NDI indication value is the same as that in previous scheduling, this scheduling is retransmission of previously scheduled data; or if an NDI indication value is different from that in previous scheduling (a previous NDI indication value is 0, and the current NDI indication value is 1, or vice versa), this scheduling is new transmission. After receiving the NDI indicating new transmission, the terminal device refreshes a buffer of an associated HARQ process by using data that has not been communicated. If receiving the NDI indicating retransmission, the terminal device re-uploads data buffered in a buffer of a corresponding HARQ process.

7. Uplink scheduling: The network device schedules uplink data of the terminal device based on SR and BSR signaling sent by the terminal device. An SR is physical layer signaling. The terminal device may upload the SR to the network device by using a dedicated and periodic physical uplink control channel (physical uplink control channel, PUCCH). After receiving an SR signal sent by the terminal device, the network device learns that the terminal device needs to perform transmission of the uplink data, and may allocate an uplink resource to the terminal device. However, by using the SR signal, the network device cannot determine an amount of data that needs to be communicated by the terminal device, and cannot determine a quantity of uplink resources that should be allocated to the terminal device. Therefore, subsequently, the terminal device still needs to send a BSR signal to the network device, to report an amount of data buffered in a buffer on a terminal device side, so as to apply for the uplink resources.

After receiving an uplink scheduling application, the network device schedules the uplink data by using DCI (for example, DCI format 0_0, 0_1, or 0_2). After receiving the scheduling DCI, the terminal device uploads the data on a specified time-frequency resource block. After receiving the uploaded data, the network device does not feed back an ACK/NACK signal to the terminal device. This is different from downlink transmission. If a piece of data is not successfully uploaded, the network device determines whether to re-communicate the data. The network device directly sends, to the terminal device, DCI for scheduling retransmission of a signal, to schedule the data that needs to be retransmitted. If the data that is not successfully uploaded does not need to be re-communicated, the network device directly schedules newly communicated data, and does not schedule the data that is not successfully uploaded.

8. Unacknowledged mode (unacknowledged mode, UM): In a WCDMA system, an RLC layer is located above a MAC layer and is a part of L2, and provides segmentation and retransmission services for user and control data. Each RLC entity is configured by RRC and has three modes depending on a service type: a transparent mode (transparent mode, TM), the unacknowledged mode (UM), and an acknowledged mode (acknowledged mode, AM). Unacknowledged mode: A sending entity adds needed control protocol overheads to a higher-layer PDU, and then transmits the higher-layer PDU without ensuring that the higher-layer PDU reaches a peer entity. In addition, a retransmission protocol is not used. After marking received error data as an error, a receiving entity submits the higher-layer PDU, or directly discards the higher-layer PDU and reports to a higher layer. Because an RLC PDU includes a sequence number, integrity of the higher-layer PDU can be detected.

In addition, for ease of understanding embodiments of this application, the following several descriptions are provided.

First, in this application, "indicate" may include "directly indicate" and " indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. For example, the configuration information may include, but is not limited to, one or a combination of at least two of radio resource control signaling, MAC layer signaling, and physical layer signaling. The radio resource control signaling includes, for example, RRC signaling. The MAC layer signaling includes, for example, a MAC control element (control element, CE). The physical layer signaling includes, for example, DCI.

Second, "at least one" shown in this application means one or more, and "a plurality of" means two or more. In addition, "first", "second", and various numerical numbers (for example, "#1" and "#2") in embodiments of this application are merely used to distinguish between objects for ease of description, but are not intended to limit the scope of embodiments of this application. Sequence numbers of the following processes do not mean execution sequences. The execution sequences of the processes should be determined based on functions and internal logic of the processes, and should not be construed as any limitation on the implementation processes in embodiments of this application. It should be understood that objects described in this way are interchangeable in proper circumstances, so that solutions other than embodiments of this application can be described. In addition, in embodiments of this application, words such as "510", "610", and "810" are merely identifiers for ease of description, and do not limit a sequence of performing steps.

Third, in this application, the word like "example" or "for example" is used to represent an example, an instance, or an illustration. Any embodiment or design scheme described as "example" or "for example" in this application should not be construed as being more preferred or advantageous than other embodiments or design schemes. To be precise, use of the word like "example" or "for example" is intended to present a relative concept in a specific manner.

Fourth, "store" in embodiments of this application may mean storing in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fifth, "protocols" in embodiments of this application may refer to standard protocols in the communication field, for example, may include an LTE protocol, an NR protocol, and a related protocol applied to a future communication system. This is not limited in this application.

Sixth, in embodiments of this application, the control channel may include other physical layer control channels such as a PDCCH and an enhanced physical downlink control channel (enhanced physical downlink control channel, EPDCCH). However, for ease of description, the following terms or concepts are described only by using the PDCCH as an example, and embodiments of this application are not limited thereto.

It should be understood that, in embodiments of this application, a description is provided by using an example in which the downlink control channel is the physical downlink control channel PDCCH, but this does not constitute a limitation on embodiments of this application. Actually, the downlink control channel may also be defined as another term or concept, which is applicable to the technical solutions in embodiments of this application. In embodiments of this application, the downlink control channel and the PDCCH may be alternately used, and the PDCCH may be considered as an example description of the uplink control channel.

Seventh, in embodiments of this application, terms and English acronyms, such as the downlink control information (DCI), the media access control control element (MAC CE), and the radio resource control (RRC), are all examples provided for ease of description. This shall not constitute any limitation on this application. This application does not exclude a possibility of defining another term that can implement a same or similar function in an existing or a future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes scenarios to which communication methods provided in embodiments of this application can be applied, describes the basic concepts that may be used in embodiments of this application, and describes a current uplink scheduling manner in the basic concepts. It can be learned from the foregoing that the current uplink scheduling manner has the following problems:
(1) When scheduling the uplink data, the network device does not immediately feed back the ACK/NACK signal to the terminal device. The terminal device cannot immediately determine whether the currently uploaded data is successfully uploaded. The terminal device can determine, by using the HARQ process, that the network device no longer schedules the previously uploaded data. This may be because the network device successfully receives the data, or may be because a maximum quantity of retransmission times is reached and the network device no longer schedules retransmission. Therefore, the terminal device cannot determine whether the uploaded data is successfully uploaded.
(2) Compression encoding of video frames in an XR service depends on each other. If a PDU set #2 depends on a PDU set #1, but the PDU set #1 is not successfully uploaded, the PDU set #2 cannot be successfully decoded at an application layer even if the PDU set #2 is successfully uploaded. Because a terminal device cannot determine whether the PDU set #1 is successfully uploaded, even if the PDU set #1 fails to be uploaded, the terminal cannot actively give up uploading the PDU set #2. In other words, the PDU set #2 scheduled by a network device is an invalid frame, causing a waste of uplink resources.

To resolve a problem existing in the current uplink scheduling, this application provides a communication method, to determine whether the uplink data is successfully uploaded, and avoid the waste of the uplink resources caused by scheduling the invalid frame.

It should be understood that the communication method provided in embodiments of this application may be applied to a system in which communication is performed by using a multi-antenna technology, for example, a communication system 100 shown in FIG. 1. The communication system may include at least one network device and at least one terminal device. The network device may communicate with the terminal device by using the multi-antenna technology.

It should be further understood that a specific structure of an execution body of the method provided in embodiments of this application is not particularly limited in embodiments shown below, provided that communication can be performed according to the method provided in embodiments of this application by running a program that records code of the method provided in embodiments of this application. For example, the method provided in embodiments of this application may be performed by the terminal device or the network device, or may be performed by a functional module that is in the terminal device or the network device and that can invoke a program and execute the program.

The following describes in detail the communication method provided in embodiments of this application by using interaction between the network device and the terminal device as an example.

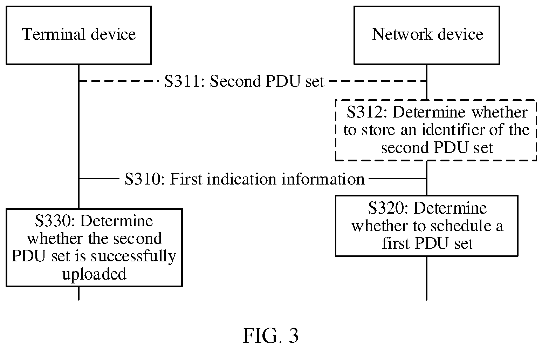

FIG. 3 is a schematic flowchart of a communication method according to this application. The method includes the following step:
S310: A terminal device sends first indication information to a network device, in other words, the network device receives the first indication information from the terminal device.

The first indication information indicates a second PDU set referenced (which may also be referred to as depended on) by a first PDU set. That the first PDU set references (which may also be referred to as depends on) the second PDU set may be understood as that successful decoding of the first PDU set is premised on successful decoding of the second PDU set. In other words, on the premise that the second PDU set is successfully decoded (or on the premise that the second PDU set is successfully uploaded), the first PDU set can be possibly successfully decoded.

Specifically, the first PDU set is a PDU set to be sent by the terminal device, for example, buffered in a buffer of the terminal device (for example, a PDU set buffered in a buffer at an RLC layer of the terminal device and/or a buffer at a PDCP layer of the terminal device).

For example, after the first PDU set enters the buffer at the RLC layer of the terminal device and before the first PDU set is submitted to a MAC layer of the terminal device for packet assembly, the terminal device is triggered to send the first indication information to the network device.

It can be learned from the foregoing that the first indication information can indicate the second PDU set. For example, the first indication information includes information that can indicate the second PDU set. Optionally, the first indication information includes an identifier of the second PDU set (for example, a sequence number of the second PDU set).

For example, in this embodiment, the terminal device may learn of the identifier of the second PDU set by using the following procedure:
When or after receiving the first PDU set generated by an application layer of the terminal device, a protocol layer of the terminal device can learn of, through header detection (for example, a method like deep packet inspection or packet filtering), an identifier of the first PDU set and the identifier of the second PDU set referenced by the first PDU set. Specifically, when packaging data of the first PDU set, the application layer of the terminal device includes the identifier of the first PDU set and an identifier of at least one PDU set referenced by the first PDU set in a data packet header of a PDU that belongs to the first PDU set (for example, a data packet header of each PDU that belongs to the first PDU set, or only a data packet header of a 1^{st} PDU in the first PDU set). After generating the first PDU set, the application layer of the terminal device enters an access stratum (access stratum, AS) layer, and performs header detection at a protocol layer (for example, an SDAP layer, the PDCP layer, a NAS layer, or an RRC layer) of the AS layer, to obtain the identifier of the first PDU set and the identifier of the at least one PDU set referenced by the first PDU set, where the second PDU set is one of the at least one PDU set.

The second PDU set is a PDU set that has been sent by the terminal device. A PDU set referenced by the first PDU set is not sent or is being sent (for example, the PDU set that is referenced by the first PDU set and that is buffered in the buffer at the RLC layer of the terminal device or the buffer at the PDCP layer of the terminal device), and does not need to be indicated by using the first indication information.

For example, the PDU set referenced by the first PDU set includes a PDU set #1, a PDU set #2, and a PDU set #3. If the PDU set #1 is a PDU set that has been sent by the terminal device, and the PDU set #2 and the PDU set #3 are PDU sets that are not sent by the terminal device, or the PDU set #2 and the PDU set #3 are PDU sets that are being sent by the terminal device, the first indication information only needs to indicate the PDU set #1. The PDU set #2 and the PDU set #3 do not need to be indicated. A reason is that a purpose of sending the first indication information is for the network device to determine whether the sent PDU set #1 is successfully received. If the terminal device knows that the PDU set #2 and the PDU set #3 have not been successfully sent, the terminal device has learned that the network device does not successfully receive the PDU set #2 and the PDU set #3, and there is no need to use the first indication information to indicate the PDU set #2 and the PDU set #3 in order for the network device to determine whether the PDU set #2 and the PDU set #3 are successfully received.

It should be understood that the sent PDU set referenced by the first PDU set may further include another PDU set other than the second PDU set. In this case, the first indication information may further indicate the another PDU set referenced by the first PDU set. For ease of description, in this embodiment, an example in which the PDU set referenced by the first PDU set is the second PDU set is used for description. In other words, regardless of a quantity of sent PDU sets referenced by the first PDU set, the sent PDU sets referenced by the first PDU set may be referred to as the second PDU set.

In addition, the terminal device may report, at a time, information indicating the sent PDU sets referenced by a plurality of PDU sets. In other words, the terminal device may indicate, at a time by using one piece of indication information, the PDU sets respectively referenced by the plurality of PDU sets in a buffer.

For example, the first PDU set includes a first PDU set #1, a first PDU set #2, and a first PDU set #3, a second PDU set #1 and a second PDU set #2 that are referenced by the first PDU set #1 have been sent, a second PDU set #3 and a second PDU set #4 that are referenced by the first PDU set #2 have been sent, and a second PDU set #5 and a second PDU set #6 that are referenced by the first PDU set #3 have been sent. The first indication information may indicate the second PDU set #1, the second PDU set #2, the second PDU set #3, the second PDU set #4, the second PDU set #5, and the second PDU set #6.

For example, to simplify the solution, the first indication information may still use an existing signaling format. For example, the first indication information is a MAC CE, and the MAC CE includes a logical channel identifier LCID and the identifier of the second PDU set. The LCID indicates a logical channel corresponding to the MAC CE, and the logical channel is for transmission of an identifier of the PDU set referenced by the first PDU set. It may be understood as that the LCID indicates that a type of the MAC CE is a MAC CE indicating the PDU set referenced by the first PDU set. The identifier of the second PDU set identifies the second PDU set.

For example, the MAC CE may be referred to as a dependency (Dependency) MAC CE, and a signaling format of the dependency MAC CE is shown in the following Table 1:

| LCID | R | R |
|---|---|---|
| Identifier of the second PDU set #1 referenced by the first PDU set | | |
| Identifier of the second PDU set #2 referenced by the first PDU set | | |
| ... | | |

The identifier of the second PDU set #1 may be a sequence number of the second PDU set #1, or other information that can identify the second PDU set #1. Similarly, the identifier of the second PDU set #2 may be a sequence number of the second PDU set #2, or other information that can identify the second PDU set #2.

It should be noted that, in this embodiment, a case in which the second PDU set is referenced by the first PDU set is mainly considered, and for a PDU set that belongs to an independent frame (for example, a PDU set that does not reference another PDU set may be referred to as an independent PDU set), if there is no PDU set to be referenced, no PDU set to be referenced needs to be reported by using the first indication information.

For example, for the independent PDU set that has no PDU set to be referenced, the first indication information may not be sent, or the first indication information is sent and a field indicating the referenced PDU set in the first indication information is set to 0.

For example, for a dependency MAC CE triggered by a PDU set of an independent frame, a field of a depended-on PDU set SN included in the dependency MAC CE is set to 0.

In a possible implementation, when the first indication information is the MAC CE, after the terminal device triggers the MAC CE, if there is an uplink resource at the MAC layer of the terminal device, the uplink resource may be sent to the network device together with a buffer status report (buffer status report, BSR) MAC CE.

In another possible implementation, the terminal device may request to allocate an uplink resource for transmission of the first indication information.

How the terminal device sends the first indication information to the network device is not limited in this embodiment.

Further, in this embodiment, after receiving the first indication information, the network device may compare the identifier of the second PDU set with the identifier of the at least one locally stored PDU set, and determine, based on a comparison result, whether the first PDU set needs to be scheduled. A method procedure shown in FIG. 3 further includes the following step:
S320: The network device determines whether to schedule the first PDU set.

In a possible implementation, when the network device determines that the second PDU set is not successfully received, the network device determines not to schedule the first PDU set.

For example, the PDU set successfully received by the network device includes a PDU set #1 and a PDU set #3, and the network device locally stores identifiers "#1" and "#3" of the PDU set #1 and the PDU set #3. After receiving the first indication information, the network device learns that the identifier of the second PDU set is "#2", and determines that the network device does not locally store the identifier "#2". In this case, the network device determines that the second PDU set is not successfully received.

It can be learned from the foregoing that the successful decoding of the first PDU set is premised on the successful decoding of the second PDU set. If the network device determines that the second PDU set is not successfully received, and determines, by using information indicating a function of the first indication information (for example, the LCID in the first indication information), that the first indication information indicates the second PDU set referenced by the first PDU set, the network device determines that the second PDU set is not successfully received, and the first PDU set does not need to be scheduled. Therefore, in this implementation, the network device determines not to schedule the first PDU set.

In another possible implementation, when the network device determines that the second PDU set is successfully received, the network device determines to schedule the first PDU set.

For example, the PDU set successfully received by the network device includes a PDU set #2 and a PDU set #3, and the network device locally stores identifiers "#2" and "#3" of the PDU set #1 and the PDU set #3. After the network device receives the first indication information, learns that the identifier of the second PDU set is "#2", and determines that the network device locally stores the identifier "#2", the network device determines that the second PDU set is successfully received, so that the network device determines to schedule the first PDU set.

For example, if the network device determines to schedule the first PDU set, the network device may send scheduling information (for example, DCI signaling) to the terminal device through a PDCCH channel.

It can be learned from step S320 that the network device determines, by determining whether the second PDU set is successfully received, whether the first PDU set needs to be scheduled. In this case, the method procedure shown in FIG. 3 further includes the following step:

S311: The terminal device sends the second PDU set to the network device, in other words, the network device receives the second PDU set from the terminal device.

Specifically, the second PDU set includes third indication information, and the third indication information is provided for the network device, so that the network device determines, based on the third indication information, whether the second PDU set is successfully received. Optionally, the third indication information may be referred to as integrity indication information.

For example, the third indication information includes at least one of the following: identifiers of a 1^{st} PDU and a last PDU included in the second PDU set, a total quantity of PDUs included in the second PDU set, a quantity of successfully communicated PDUs needed for the successful decoding of the second PDU set, a ratio of a quantity of successfully communicated PDUs needed for the successful decoding of the second PDU set to a total quantity of PDUs included in the second PDU set, an identifier indicating that a PDU included in the second PDU set belongs to the second PDU set, or a sequence number of a PDU included in the second PDU set in the second PDU set.

In this embodiment, a function of the third indication information may be implemented in different manners.

It can be learned from the foregoing that the second PDU set includes the third indication information for integrity detection. For ease of understanding, the following briefly describes how the terminal device generates the second PDU set including the third indication information.

When packaging data of the second PDU set, the application layer of the terminal device includes the following data in a data packet header of a PDU that belongs to the second PDU set (for example, a data packet header of each PDU that belongs to the second PDU set, or only a data packet header of the 1^{st} PDU in the second PDU set):
a sequence number (sequence number, SN) of the second PDU set and a sequence number of a PDU set on which the second PDU set depends.

For example, the application layer of the terminal device generates the second PDU set, and the 1^{st} PDU or each PDU in the second PDU set includes the identifier of the second PDU set and an identifier of at least one PDU set referenced by the second PDU set.

It should be understood that a manner in which the application layer of the terminal device generates another PDU set is similar to a manner in which the application layer of the terminal device generates the second PDU set (or the first PDU set). If a PDU set references a plurality of PDU sets, the application layer of the terminal device needs to include, in a data packet header of the PDU set (for example, a 1^{st} PDU in the PDU set or each PDU in the PDU set), identifiers of all PDU sets referenced by the PDU set. If a PDU set is an independent PDU set, the terminal device may set, to zero, a field that is in a data packet header of the independent PDU set and that carries an identifier of a PDU set referenced by the independent PDU set.

Further, after the application layer of the terminal device generates the second PDU set, the terminal device enters the AS layer, performs header detection at a protocol layer (for example, the SDAP layer or the PDCP layer) of the AS layer, to obtain the identifier of the second PDU set and the identifier of the first PDU set referenced by the second PDU set, and forwards the two types of identifiers to a header of the SDAP layer or the PDCP layer of the second PDU set.

In this embodiment, to help the network device perform integrity detection on a PDU set, the terminal device may include the third indication information for integrity detection in the second PDU set.

In a possible implementation, the terminal device identifies the 1^{st} PDU and the last PDU in the second PDU set, to respectively indicate the 1^{st} PDU and the last PDU in the second PDU set.

In addition, the terminal device adds an identifier of a PDU in the second PDU set to each PDU that belongs to the second PDU set. For example, a PDU sequence number of the PDU in the second PDU set is added to each PDU.

In this implementation, the third indication information may be understood as including identification information of the 1^{st} PDU and the last PDU in the second PDU set, and the PDU sequence number of the PDU included in the second PDU set in the second PDU set.

In another possible implementation, the terminal device provides the total quantity of PDUs included in the second PDU set and the identifier indicating that the PDU included in the second PDU set belongs to the second PDU set.

In this implementation, the third indication information may be understood as including the total quantity of PDUs included in the second PDU set and the identifier indicating that the PDU included in the second PDU set belongs to the second PDU set.

In still another possible implementation, the terminal device provides a minimum value of a quantity of PDUs needed for successful transmission of the second PDU set and the identifier indicating that the PDU included in the second PDU set belongs to the second PDU set.

In this implementation, the third indication information may be understood as including the quantity of PDUs needed for successful transmission of the second PDU set and the identifier indicating that the PDU included in the second PDU set belongs to the second PDU set.

It should be understood that the foregoing merely uses an example in which the second PDU set including the third indication information is generated to describe how the terminal device generates the PDU set that includes the information for integrity detection in this embodiment. This does not constitute any limitation on the protection scope of this application. For example, for another PDU set other than the second PDU set, for a process in which the terminal device generates the PDU set, refer to a procedure in which the terminal device generates the second PDU set. Details are not described herein again.

After receiving the PDU included in the second PDU set, the network device can determine, based on the third indication information in the second PDU set, whether to completely receive the second PDU set, and determine, based on a determining result, whether to store the identifier of the second PDU set. The method procedure shown in FIG. 3 further includes the following step:
S312: The network device determines whether to store the identifier of the second PDU set.

Specifically, in this embodiment, after receiving data sent by the terminal device, the network device needs to perform PDU set integrity detection on the received data, and record an SN of the completely received PDU set. For ease of description, an example in which the network device performs integrity detection on the second PDU set is used for description. For another PDU set, a procedure in which the network device performs integrity detection is similar, and details are not described again.

For example, a process in which the network device performs integrity detection on the second PDU set is as follows:
As described above, after performing header detection at the protocol layer (for example, the SDAP or the PDCP) of the AS of the terminal device, the terminal device forwards the identifier of the detected second PDU set and the identifier of the PDU set referenced by the second PDU set to a header of a data packet at a protocol layer related to the second PDU set. Correspondingly, after receiving the data of the terminal device, the network device also performs integrity detection on the PDU set at a corresponding protocol layer.

If the identifier of the detected second PDU set and the identifier of the PDU set referenced by the second PDU set are loaded at the SDAP layer of the second PDU set, the network device performs integrity detection on the second PDU set at an SDAP layer.

If the identifier of the detected second PDU set and the identifier of the PDU set referenced by the second PDU set are loaded at the PDCP layer of the second PDU set, the network device performs integrity detection on the second PDU set at a PDCP layer.

For example, if the network device performs integrity detection on the second PDU set at the PDCP layer, the network device may perform integrity detection on the second PDU set when submitting the data packet of the second PDU set to an upper layer after reordering of the second PDU set is completed at the PDCP layer. The detection is for determining whether all PDUs included in the second PDU set are successfully received, or the detection is for determining whether a quantity of successfully received PDUs in the second PDU set exceeds a first threshold.

In a possible implementation, after receiving the data packet uploaded by the terminal device, the network device determines, at the foregoing protocol layer (for example, the SDAP or the PDCP), the 1^{st} PDU and the last PDU that belong to the second PDU set, and determines whether the second PDU set is completely received based on coherence of identifiers of the PDUs in the second PDU set.

For example, the third indication information indicates that the 1^{st} PDU and the last PDU in the second PDU set are respectively a PDU #1 and a PDU #6, and the identifiers of the PDUs in the second PDU set are the PDU #1, a PDU #2, a PDU #3, a PDU #4, a PDU #5 and the PDU #6. When the network device successfully receives the PDU #1 and the PDU #/6, and the identifiers of the received PDUs in the second PDU set are coherent, the network device determines that the second PDU set is completely received; or when the network device does not successfully receive the PDU #1 and the PDU #/6, or the identifiers of the received PDUs in the second PDU set are not coherent, the network device determines that the second PDU set is not completely received.

In another possible implementation, the network device determines, by determining a total quantity of data packets that belong to the second PDU set and the identifier of the PDU that belongs to the second PDU set, whether the second PDU set is completely received.

For example, the third indication information indicates that identifiers of the PDUs in the second PDU set are the PDU #1, the PDU #2, the PDU #3, the PDU #4, the PDU #5 and the PDU #6, and a total quantity of PDUs included in the second PDU set is 6. When the network device receives six PDUs, and identifiers of the PDUs are the PDU #1, the PDU #2, the PDU #3, the PDU #4, the PDU #5 and the PDU #6, the network device determines that the second PDU set is completely received; or when the network device does not receives six PDUs, or identifiers of the PDUs are not coherent, the network device determines that the second PDU set is not completely received.

In still another possible implementation, the network device determines, by determining whether a total quantity of successfully received data packets that belong to the second PDU set reaches a threshold, whether the second PDU set is completely received.

For example, the third indication information indicates that the total quantity of successfully received data packets that belong to the second PDU set is 3, and identifiers of PDUs in the second PDU set are the PDU #1, the PDU #2, the PDU #3, the PDU #4, the PDU #5 and the PDU #6. When the network device receives three or more PDUs, and identifiers of the at least three PDUs are three of the PDU #1, the PDU #2, the PDU #3, the PDU #4, the PDU #5 and the PDU #6, the network device determines that the second PDU set is completely received; or when the network device receives less than three PDUs, or when the network device receives three or more PDUs and identifiers of the at least three PDUs are not all three of the PDU #1, the PDU #2, the PDU #3, the PDU #4, the PDU #5 and the PDU #6, the network device determines that the second PDU set is not completely received.

It should be understood that the foregoing is merely an example for describing a possible manner in which the network device performs integrity detection on the second PDU set, and does not constitute any limitation on the protection scope of this application. Another method that can implement the integrity detection on the data packet also falls within the protection scope of this application. Details are not described herein again.

If the network device determines that the second PDU set is completely received, the network device stores the identifier of the second PDU set; or if the network device determines that the second PDU set is not completely received, the network device does not store the identifier of the second PDU set.

For example, the identifier of the second PDU set is "#2". When the network device determines that the second PDU set is completely received, the network device stores "#2"; or when the network device determines that the second PDU set is not completely received, the network device does not store "#2".

For example, the network device may automatically clear an identifier of a PDU set that is stored before time T or an interval of N PDU set identifiers. A value of T and a value of N are set to satisfy a case in which an identifier of a cleared PDU set no longer indicates an identifier of a PDU set referenced by a subsequently communicated PDU set.

It can be learned from the foregoing that the network device determines, by using the stored identifier of the PDU set, whether the second PDU set referenced by the first PDU set in step S320 is successfully uploaded. If the identifier of the second PDU set reported by using the first indication information is one of identifiers that are of PDU sets and that are stored by the network device, it indicates that the corresponding second PDU set is successfully uploaded; or if the identifier of the second PDU set reported by using the first indication information is not one of identifiers that are of PDU sets and that are stored by the network device, it indicates that the second PDU set is not successfully uploaded.

Further, in this embodiment, after sending the first indication information, the terminal device can determine, based on at least one of a timeout status of a timer of the terminal device and a feedback status of the network device for the first indication information, whether the second PDU set is successfully uploaded. The method procedure shown in FIG. 3 further includes the following step:
S330: The terminal device determines whether the second PDU set is successfully uploaded.

In a possible implementation, the terminal device determines, based on a timeout status of a local first timer, whether the second PDU set is successfully uploaded.

Specifically, the first timer is a discard timer set by the terminal device for the first PDU set, and a start moment of the first timer is a moment at which a PDCP entity of the terminal device receives the first PDU set. In addition, in this implementation, timing duration of the first timer is less than a frame arrival periodicity, and the frame arrival periodicity in this embodiment indicates an interval between arrival of two adjacent frames at the buffer of the terminal device. The PDCP entity of the terminal device may be understood as a transmission entity (for example, a transmitting PDCP entity) at the PDCP layer of the terminal device.

For example, the start moment of the first timer is a moment at which the PDCP entity of the terminal device receives the first PDU set, or may be understood as a moment at which the PDCP layer of the terminal device transfers the first PDU set to the RLC layer of the terminal device, or may be understood as a moment at which the first PDU set is buffered into the buffer.

It should be understood that setting of the first timer and the frame arrival periodicity is not limited in this embodiment. For details, refer to descriptions in a current conventional technology. In this embodiment, the timeout status of the existing timer is reused, to determine whether the second PDU set is successfully uploaded.

In addition, that the network device can learn of information related to the first timer and the frame arrival periodicity may be understood as that in this embodiment, the network device can learn that an expiration moment (or an end moment) of the first timer is earlier than a moment at which a second frame arrives at the buffer of the terminal device, where the second frame is a next frame of a first frame, and the first frame includes the first PDU set.

For example, the first timer is configured by the network device, and the network device can determine the information (for example, information such as the timing duration and the start moment) related to the first timer; and the information related to the frame arrival periodicity is reported by the terminal device to the network device.

In this implementation, that the terminal device determines, based on the timeout status of the local first timer, that the second PDU set is not successfully uploaded includes: If the terminal device does not receive scheduling information of the network device after the first timer expires or when the first timer expires, the terminal device determines that the second PDU set is not successfully uploaded.

Alternatively, that the terminal device determines, based on the timeout status of the local first timer, that the second PDU set is successfully uploaded includes: Before the first timer expires, the terminal device receives scheduling information of the network device. The terminal device uploads the first PDU set based on the scheduling information. It should be understood that the scheduling information of the network device may be for scheduling the part of PDUs in the first PDU set. After the first timer expires or when the first timer expires, if a part of PDUs in the first PDU set are still buffered in the buffer of the terminal device, the terminal device discards the part of PDUs that are not uploaded.

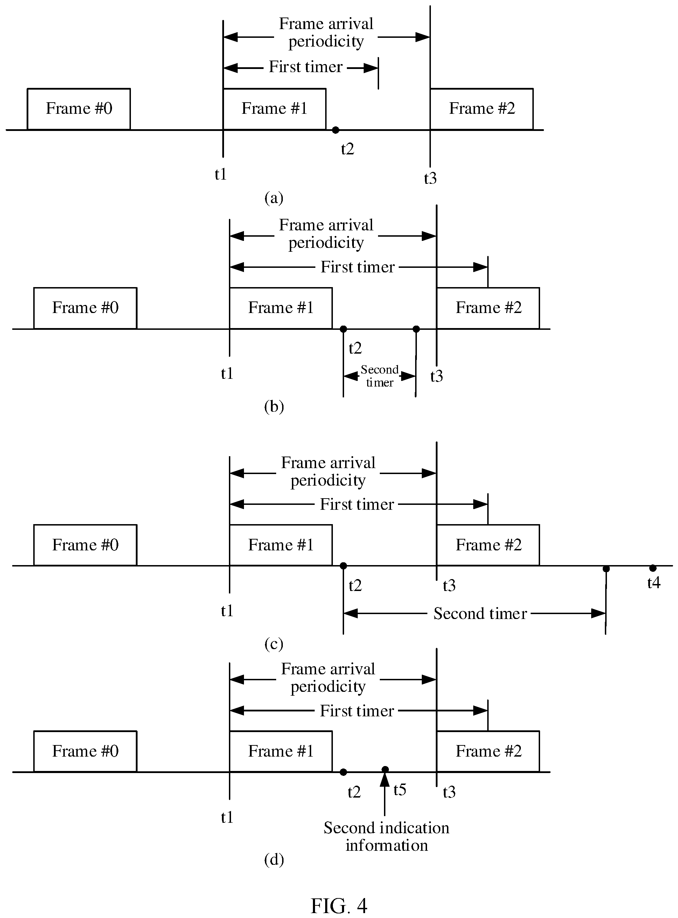

For ease of understanding, how the terminal device determines, based on the timeout status of the first timer, whether the second PDU set is successfully uploaded is described in detail with reference to (a) in FIG. 4.

As shown in (a) in FIG. 4, a PDU set to be sent by the terminal device is a PDU set #1 (namely, the foregoing first PDU set), and the PDU set #1 is a PDU set included in a frame #1. The PDU set #1 enters a buffer (buffer) at the RLC layer of the terminal device at a moment t1, and the terminal device starts the first timer (for example, starts a discard timer (discardTimer)) at the moment t1. The first timer indicates to discard the PDU set #1 if DCI for scheduling the PDU set #1 is not received before the first timer expires.

In this embodiment, before submitting the PDU set #1 to the MAC layer for packet assembly, the terminal device triggers reporting of a dependency MAC CE (for example, reporting of the first indication information at a moment t2 after the moment t1), and the dependency MAC CE indicates a PDU set #0 (namely, the foregoing second PDU set) on which the PDU set #1 depends. The PDU set #0 is a reported PDU set. For example, the PDU set #0 is a PDU set included in a frame #0.

For example, if the network device determines that the PDU set #0 is not successfully uploaded (for example, the network device determines that the PDU set in the frame #0 is not successfully uploaded), the network device determines not to schedule the PDU set #1 in the buffer of the terminal device, but the network device does not explicitly notify the terminal device that the PDU set #0 is not successfully received. If the terminal device still does not receive scheduling information of the network device after the first timer expires, the terminal device considers by default that the PDU set #0 is not successfully received, and clears the PDU set #1 in the buffer.

For another example, if the network device determines that the PDU set #0 is successfully uploaded (for example, the network device determines that the PDU set in the frame #0 has been successfully uploaded), the network device determines to schedule the PDU set #1 in the buffer of the terminal device, and the network device delivers scheduling information (for example, DCI) to schedule the PDU set #1. After the first timer expires, if a part of PDUs in the PDU set #1 are still buffered in the buffer of the terminal device, the part of PDUs in the buffer are cleared.

In this embodiment, the timing duration of the first timer is less than or equal to the frame arrival periodicity. In other words, the first timer expires before a PDU set included in a next frame enters the buffer at the RLC/PDCP layer of the terminal device (for example, at a moment t3 shown in (a) in FIG. 4).

It can be learned from the foregoing that, when the network device determines that the PDU set #0 is not successfully uploaded, the network device does not need to explicitly notify the terminal device that the PDU set #0 is not successfully received, and the terminal device can determine, based on the timeout status of the timer of the terminal device (for example, the first timer expires, or the timing duration of the first timer is less than the frame arrival periodicity), that the PDU set #0 is not successfully received. Therefore, it is determined that the PDU set #1 does not need to be uploaded, and the PDU set #1 is discarded to save local buffer space.

In another possible implementation, the terminal device determines, based on a timeout status of a local second timer, whether the second PDU set is successfully uploaded.

Specifically, the second timer is a timer started when the terminal device sends the first indication information, and a start moment of the second timer is a moment at which the terminal device sends the first indication information (in other words, a moment at which the terminal device completes sending the first indication information).

In a possible implementation, an end moment of the second timer is before a second frame arrives at the buffer of the terminal device, where the second frame is a next frame of a first frame, and the first frame includes the first PDU set.

In this implementation, that the terminal device determines, based on the timeout status of the local second timer, that the second PDU set is not successfully uploaded includes: If the terminal device does not receive scheduling information of the network device before the second timer expires (in other words, during running of the second timer), the terminal device determines that the second PDU set is not successfully uploaded.

Alternatively, that the terminal device determines, based on the timeout status of the local second timer, that the second PDU set is successfully uploaded includes: If the terminal device receives scheduling information of the network device before the second timer expires (in other words, during running of the second timer), the terminal device determines that the second PDU set is successfully uploaded.

For ease of understanding, how the terminal device determines, based on the timeout status of the second timer, that the second PDU set is not successfully uploaded is described in detail with reference to (b) in FIG. 4.

As shown in (b) in FIG. 4, a PDU set to be sent by the terminal device is a PDU set #1, and the PDU set #1 is a PDU set included in a frame #1. The PDU set #1 enters a buffer (buffer) at the RLC layer of the terminal device at a moment t1, and the terminal device starts the first timer (for example, starts a discard timer (discardTimer)) at the moment t1. The first timer indicates to discard the PDU set #1 if DCI for scheduling the PDU set #1 is not received before the first timer expires.

In this embodiment, before submitting the PDU set #1 to the MAC layer for packet assembly, the terminal device triggers reporting of a dependency MAC CE (for example, reporting of the first indication information at a moment t2 after the moment t1), and starts the second timer (for example, a dropping packet timer (droppingPacketTimer)) at a moment at which the dependency MAC CE is reported. Specifically, the dependency MAC CE indicates a PDU set #0 on which the PDU set #1 depends, the PDU set #0 is a reported PDU set, and the PDU set #0 is a PDU set included in a frame #0.

If the terminal device receives, during running of the droppingPacketTimer, DCI that is for scheduling uplink data and that is sent by the network device, the terminal device stops the running of the droppingPacketTimer. For example, the network device determines that the PDU set #0 is successfully uploaded, and may schedule the PDU set #1 by using the DCI. The terminal device determines that the PDU set #0 is successfully uploaded and terminates the droppingPacketTimer.

If the terminal device receives, during running of the droppingPacketTimer, DCI that is sent by the network device and that is for scheduling retransmission of the dependency MAC CE, the terminal device restarts the droppingPacketTimer after performing retransmission of the dependency MAC CE. For example, if the network device does not successfully receive the dependency MAC CE, the network device may indicate the terminal device to perform retransmission of the dependency MAC CE. Processing of the retransmission of the dependency MAC CE is similar to that of the initial transmission of the dependency MAC CE, and details are not described again.

If the terminal device does not receive, during running of the droppingPacketTimer, DCI for scheduling uplink data (for example, the DCI for scheduling the uplink data and the DCI for scheduling the retransmission of the dependency MAC CE), the terminal device determines that the PDU set #0 is not successfully uploaded, the network device does not schedule the PDU set #1 in the buffer, and the terminal device may clear the PDU set #1 in the buffer.

In this embodiment, the timing duration of the first timer is greater than the frame arrival periodicity. In other words, the first timer expires after a PDU set included in a next frame enters the buffer at the RLC/PDCP layer of the terminal device (for example, at a moment t3 shown in (b) in FIG. 4).

It should be noted that, if an end moment of the second timer is after the second frame arrives at the buffer of the terminal device, and a new PDU set (for example, a PDU set in a frame #2) arrives at the buffer during running of the second timer, the terminal device does not send a scheduling request (scheduling request, SR) for the new PDU set and the first indication information (for example, a dependency MAC CE for the new PDU set). As shown in (c) in FIG. 4, after the second timer expires (for example, t4 in (c) in FIG. 4), an SR of a new PDU set and the first indication information are sent.

In still another possible implementation, the terminal device determines, based on a feedback status of the network device for the first indication information, whether the second PDU set is successfully uploaded.

Specifically, the feedback status of the network device for the first indication information may be whether the network device delivers second indication information for the first indication information, to indicate that the second PDU set is not successfully uploaded.

In this implementation, that the terminal device determines, based on a feedback status of the network device for the first indication information, whether the second PDU set is successfully uploaded includes: The terminal device receives the second indication information from the network device, where the second indication information indicates that the second PDU set is not successfully uploaded.

For example, that the second indication information indicates that the second PDU set is not successfully uploaded includes: The second indication information indicates that a part of PDUs included in the second PDU set are not successfully uploaded or no PDUs included in the second PDU set are successfully uploaded; or the second indication information indicates that a quantity of successfully uploaded PDUs in the second PDU set is less than a first threshold.

It should be understood that the foregoing is merely an example for describing a possible manner in which the second indication information indicates that the second PDU set is not successfully uploaded, and does not constitute any limitation on the protection scope of this application. Other manners that can indicate that the second PDU set is not successfully uploaded also fall within the protection scope of this application. Details are not described herein again.

In a possible implementation, when the timing duration of the first timer is greater than the frame arrival periodicity, to avoid a case in which UE discards a PDU set #1 in a frame #1 after a discardTimer of the frame #1 expires, when a PDU set in a frame #2 is scheduled, the PDU set #1 in the frame #1 is inevitably scheduled first, causing a waste of resources.

For example, the frame #2 does not depend on the frame #1. After receiving a dependency MAC CE for the PDU set included in the frame #2, the network device may schedule the PDU set included in the frame #2. However, when the network device schedules the PDU set included in the frame #2, if a buffer of the UE still buffers the PDU set #1 in the frame #1, the terminal device sends the PDU set #1 through transmission of an uplink resource of the PDU set included in the frame #2, causing a waste of resources. Therefore, in this implementation, the network device needs to deliver the second indication information, to indicate the terminal device to discard the PDU set #1 in the frame #1.

In another possible implementation, if the network device detects that some of depended-on PDU sets reported by the dependency MAC CE are successfully uploaded and the other some PDU sets are not successfully uploaded, the network device delivers second indication information to indicate, to the terminal device, identifiers of PDU sets that are not successfully uploaded, where the PDU sets that are not successfully uploaded include the PDU set #0.

For ease of understanding, that the terminal device determines, based on the feedback status of the network device for the first indication information, that the second PDU set is not successfully uploaded is described in detail with reference to (d) in FIG. 4.

As shown in (d) in FIG. 4, a PDU set to be sent by the terminal device is a PDU set #1, and the PDU set #1 is a PDU set included in a frame #1. The PDU set #1 enters a buffer (buffer) at the PDCP layer of the terminal device at a moment t1, and the terminal device starts the first timer (for example, starts a discard timer (discardTimer)) at the moment t1. The first timer indicates to discard the PDU set #1 if DCI for scheduling the PDU set #1 is not received before the first timer expires.

In a possible implementation, in this embodiment, before submitting the PDU set #1 to the MAC layer for packet assembly, the terminal device triggers reporting of a dependency MAC CE (for example, reporting of the first indication information at a moment t2 after the moment t1), and the dependency MAC CE indicates a PDU set #0 on which the PDU set #1 depends. The PDU set #0 is a reported PDU set, and the PDU set #0 is a PDU set included in a frame #0.

For example, if the network device determines that the PDU set #0 is not successfully uploaded (for example, the PDU set in the frame #0 is not successfully uploaded), the network device determines not to schedule the PDU set #1 in the buffer of the terminal device, and the network device determines that the timing duration of the first timer is greater than the frame arrival periodicity. In other words, after a PDU set included in a next frame enters the buffer at the RLC/PDCP layer of the terminal device (for example, at a moment t3 shown in (d) in FIG. 4), the first timer expires. The network device determines not to schedule the PDU set #1, and notifies, by using the second indication information, the terminal device to discard the PDU set #1 in the buffer (for example, the second indication information is sent at a moment t5 shown in (d) in FIG. 4).

In another possible implementation, in this embodiment, before submitting the PDU set #1 to the MAC layer for packet assembly, the terminal device triggers reporting of a dependency MAC CE (for example, reporting of the first indication information at a moment t2 after the moment t1), and the dependency MAC CE indicates a PDU set #0 and a PDU set #0_1 on which the PDU set #1 depends. The PDU set #0 and the PDU set #0_1 are reported PDU sets, and the PDU set #0 and the PDU set #0_1 are PDU sets included in a frame #0.

For example, the network device determines that the PDU set #0 is not successfully uploaded (for example, the PDU set in the frame #0 is not successfully uploaded) and the PDU set #0_1 is successfully uploaded, and the network device notifies, by using the second indication information (for example, the second indication information is sent at a moment t5 shown in (d) in FIG. 4), the terminal device that the PDU set #0 is not successfully uploaded. After receiving the second indication information, the terminal device determines that the PDU set #0 is not successfully uploaded, and determines that the PDU set #1 depends on the PDU set #0. In this case, the PDU set #1 is deleted from the buffer.

The example shown in (d) in FIG. 4 is similar to the example shown in (a) in FIG. 4. A difference lies in that the frame #2 does not depend on the frame #1, and the network device may schedule the PDU set in the frame #2. If the UE discards the PDU set #1 in the frame #1 after the discardTimer of the frame #1 expires, the UE first schedules the PDU set in the frame #1 when scheduling the PDU set in the frame #2, causing a waste of resources. Therefore, the network device needs to additionally deliver the second indication information in the example shown in (d) in FIG. 4, to indicate the UE to discard the PDU set #1 in the frame #1. The second indication information may be a MAC CE, a PDCP report, or an SDAP report, and a format and a protocol layer of the second indication information are not limited.

It should be understood that, in the embodiment shown in FIG. 3, an example in which the uplink data is the PDU set is used for description. This embodiment of this application is also applicable to other uplink data having a dependency relationship. For example, when there is a dependency relationship between first uplink data and second uplink data, before sending the first uplink data, the terminal device may alternatively notify, by using the first indication information, the network device that the first uplink data depends on the second uplink data. When determining that the second uplink data is not successfully uploaded, the terminal device does not need to schedule the first uplink data. In other words, in the foregoing embodiment, the first PDU set may be replaced with a general description "first uplink data", the second PDU set may be replaced with a general description "second uplink data", and the dependency relationship between the uplink data may be understood as a strong correlation between the first uplink data and the second uplink data. If the second uplink data is not successfully uploaded, it is meaningless even if the first uplink data is successfully uploaded.

In the embodiment shown in FIG. 3, the terminal device reports the indication information indicating the second PDU set that has been sent and that is referenced by the to-be-sent first PDU set, and after sending the first indication information, determines, based on the at least one of the timeout status (for example, the timing duration or whether the started timer expires) of the started timer and the feedback status (for example, delivering the information in response to the first indication information) of the network device for the received first indication information, whether the second PDU set is successfully uploaded. In other words, in the technical solution, the terminal device may learn whether the second PDU set is successfully uploaded.

In addition, in the embodiment shown in FIG. 3, the terminal device can determine, based on a result indicating whether the second PDU set is successfully uploaded, processing on the first PDU set. For example, the second PDU set is not successfully uploaded, and the terminal device determines that the first PDU set does not need to be uploaded. Because the successful decoding of the first PDU set is premised on the successful decoding of the second PDU set, when the second PDU set is not successfully uploaded, the first PDU set cannot be correctly decoded even if the first PDU set is uploaded, and the terminal device may discard the first PDU set.

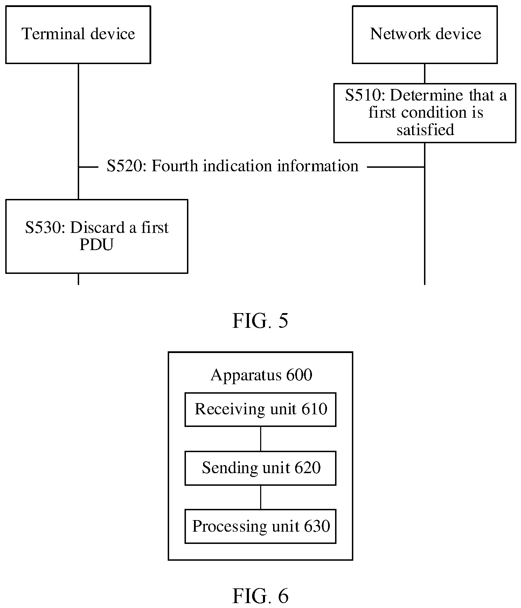

This application further provides a communication method. When a specific condition is satisfied, a network device delivers fourth indication information to indicate whether a PDU is successfully received, so that a terminal device determines whether uplink data is successfully uploaded. The following describes the communication method in detail with reference to FIG. 5.

FIG. 5 is a schematic flowchart of another communication method according to this application. The method includes the following step:
S510: A network device determines that a first condition is satisfied.

S520: The network device sends fourth indication information to a terminal device, in other words, the terminal device receives the fourth indication information from the network device.

The fourth indication information indicates a PDU that is successfully received by the network device and/or a PDU that is not successfully received by the network device.

The first condition includes at least one of the following:
The fourth indication information is periodically sent information and a moment of sending the fourth indication information arrives, the network device determines whether a third PDU set is successfully received, or the network device receives trigger information from the terminal device, where the trigger information is for triggering the network device to determine the fourth indication information.

That the network device determines whether a third PDU set is successfully received includes: The network device determines whether all PDUs included in the third PDU set are successfully received, and/or whether PDU data of the third PDU set that is successfully received by the network device exceeds a first threshold, where the first threshold is predefined.

For example, the fourth indication information may be referred to as a PDCP status report. After the PDCP status report is triggered, the PDCP status report is submitted to an RLC layer and/or a MAC layer of the network device for transmission to the terminal device.

In a possible implementation, when the first condition is that the fourth indication information is the periodically sent information and the moment of sending the fourth indication information arrives, the network device periodically sends the fourth indication information.

For example, the network device detects an uplink PDU, records a successfully received PDU and an unsuccessfully received PDU, and periodically notifies, by using the fourth indication information, the terminal device of the successfully received PDU and/or the unsuccessfully received PDU. Optionally, a periodicity of periodically sending the fourth indication information is preset (for example, the fourth indication information is delivered every 10 minutes, and a start moment of the periodic sending may be a moment at which a 1^{st} PDU is received).

In another possible implementation, when the first condition is that the network device receives the trigger information from the terminal device, the network device receives the trigger information from the terminal device, where the trigger information indicates the network device to deliver fourth indication information indicating a successfully received PDU and/or an unsuccessfully received PDU.

For example, the network device receives the trigger information of the terminal device, determines the successfully received PDU and the unsuccessfully received PDU before the trigger information is received, and notifies, by using the fourth indication information, the terminal device of the successfully received PDU and/or the unsuccessfully received PDU.

In still another possible implementation, when the first condition is that the network device determines whether the third PDU set is successfully received, the network device receives the third PDU set from the terminal device, where the third PDU set includes fifth indication information, and the fifth indication information is used by the network device to determine whether the third PDU set is successfully received.

Optionally, the fifth indication information may be referred to as integrity indication information.

The network device determines, based on the fifth indication information, whether the third PDU set is successfully received. For example, the network device determines, based on the fifth indication information, whether all PDUs included in the third PDU set are successfully received. Alternatively, for another example, the network device determines, based on the fifth indication information, whether a quantity of successfully received PDUs in the third PDU set exceeds a first threshold.

The fifth indication information includes at least one of the following: identifiers of a 1^{st} PDU and a last PDU included in the third PDU set, a total quantity of PDUs included in the third PDU set, a quantity of successfully communicated PDUs needed for successful decoding of the third PDU set, a ratio of a quantity of successfully communicated PDUs needed for successful decoding of the third PDU set to a total quantity of PDUs included in the third PDU set, an identifier indicating that a PDU included in the third PDU set belongs to the third PDU set, or a sequence number of a PDU included in the third PDU set in the third PDU set.

In this embodiment, to help the network device perform integrity detection on a PDU set, the terminal device may include the fifth indication information for integrity detection in the third PDU set. Specifically, for a process in which the terminal device generates the third PDU set, refer to the descriptions of the process in which the terminal device generates the second PDU set in the embodiment shown in FIG. 3. Details are not described herein again.

A difference lies in that the network device does not need to determine a PDU set referenced by the third PDU set.

For example, after performing header detection at a protocol layer (for example, an SDAP or a PDCP) of an AS of the terminal device, the terminal device learns of an identifier of the detected third PDU set and an identifier of the PDU set referenced by the third PDU set. The terminal device can determine, based on the identifier of the third PDU set and the identifier of the PDU set referenced by the third PDU set, the PDU set referenced by the third PDU set, and forward the identifier of the third PDU set and the identifier of the PDU set referenced by the third PDU set to a header of a data packet at a protocol layer related to the third PDU set. After receiving the third PDU set, the network device does not need to learn of the PDU set referenced by the third PDU set.

Alternatively, in this embodiment, the third PDU set sent by the terminal device carries information for integrity detection, and may not carry information indicating the PDU set referenced by the third PDU set.

Specifically, after receiving the third PDU set uploaded by the terminal device, the network device performs integrity detection on the third PDU set. For a specific procedure of the integrity detection, refer to the procedure in which the network device performs integrity detection on the second PDU set in the embodiment shown in FIG. 3. Details are not described herein again.

For example, integrity detection is performed on the third PDU set after reordering is completed at the PDCP layer. After the reordering is completed at the PDCP layer, if it is found that integrity of the third PDU set is incomplete (for example, the network device determines that the total quantity of successfully received PDUs that belong to the third PDU set does not exceed the threshold, or the network device determines that not all the PDUs that belong to the third PDU set are successfully received, to determine integrity of the transmitted third PDU set), the network device is triggered to generate a PDCP status report.

When the network device determines that the integrity of the third PDU set is missing, that is, when the PDCP layer submits the third PDU set to the SDAP layer, or the SDAP layer submits the third PDU set to a higher layer, it is found that not all data packets or data packet segments in the third PDU set are completely received (for example, a first packet, a tail packet, or a data packet in a middle part is missing). If this case occurs, and the third PDU set needs to be submitted to an upper layer, the network device is triggered to generate the PDCP status report. If this case occurs, and the third PDU set cannot be completely submitted to the upper layer, the network device may choose to directly delete the third PDU set and not submit the third PDU set to the upper layer.

Further, after receiving the fourth indication information, the terminal device can determine, based on the fourth indication information, a data packet that has been successfully communicated and a data packet that fails to be communicated, and can discard a first PDU based on a dependency relationship between a PDU set to which a PDU that fails to be communicated belongs and another PDU set. A method procedure shown in FIG. 5 further includes the following step:
S530: The terminal device discards the first PDU.

When the fourth indication information indicates the PDU that is not successfully received by the network device, the terminal device determines, based on the PDU that is not successfully received, to discard the first PDU, where the PDU that is not successfully received is a PDU in the third PDU set. The first PDU includes at least one of the following: a PDU included in a fourth PDU set, the PDU that is not communicated in the third PDU set, or a PDU included in a fifth PDU set. The fourth PDU set is a PDU set that references the third PDU set, the fifth PDU set is a PDU set that references the third PDU set and/or the fourth PDU set, that the fourth PDU set references the third PDU set indicates that successful decoding of the fourth PDU set is premised on successful decoding of the third PDU set, and that the fifth PDU set references the third PDU set and/or the fourth PDU set indicates that successful decoding of the fifth PDU set is premised on the successful decoding of the third PDU set and/or the fourth PDU set.

If the terminal device determines that all or some communicated data packets in the third PDU set are not successfully communicated, and the terminal device finds, based on a header detection result of the subsequently arrived fourth PDU set, that the fourth PDU set depends on the third PDU set, the terminal device deletes the fourth PDU set from a buffer, and an uplink resource is no longer allocated for uploading the fourth PDU set.

If the terminal device determines that some communicated data packets in the third PDU set are not successfully communicated, the network device no longer schedules the some data packets, and some other data packets in the third PDU set are not communicated in a buffer at the RLC, the terminal device deletes the other some data packets from the buffer at the RLC. If some data packets in the third PDU set are in a HARQ buffer, the some data packets are still communicated.

It should be understood that sequence numbers of the foregoing processes do not mean execution sequences. The execution sequences of the processes should be determined based on functions and internal logic of the processes, and should not be construed as any limitation on the implementation processes in embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, the network device or the terminal device). It should be understood that a specific form of the device is not limited in embodiments of this application. For example, all devices that can implement a same function in the future are applicable to embodiments of this application.

It may be understood that in the foregoing method embodiments, the methods and the operations implemented by the device (for example, the network device or the terminal device) may also be implemented by a component (for example, a chip or a circuit) of the device.

The foregoing describes in detail the communication method provided in embodiments of this application with reference to FIG. 3 and FIG. 5. The communication method is mainly described from a perspective of interaction between the network device and the terminal device. It can be understood that to implement the foregoing functions, the network device and the terminal device include corresponding hardware structures and/or software modules for implementing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes the communication apparatus provided in this application in detail with reference to FIG. 6 to FIG. 9. It should be understood that descriptions of the apparatus embodiments correspond to the descriptions of the method embodiments. Therefore, for content that is not described in detail, refer to the foregoing method embodiments. For brevity, some content is not described again.

In embodiments of this application, the transmitting end device or the receiving end device may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

For example, FIG. 6 is a diagram of a communication apparatus according to this application. As shown in FIG. 6, the apparatus 600 includes a receiving unit 610, a sending unit 620, and a processing unit 630.

In an example, the sending unit 620 is configured to report first indication information to a network device, where the first indication information indicates a second protocol data unit set PDU set referenced by a first PDU set.

The processing unit 630 is configured to determine, based on at least one of a timeout status of a timer of a terminal device and a feedback status of the network device for the first indication information, whether the second PDU set is successfully uploaded.

In another example, the receiving unit 610 is configured to receive fourth indication information from the network device, where the fourth indication information indicates a PDU that is successfully received by the network device and/or a PDU that is not successfully received by the network device.

The processing unit 630 is configured to: when the fourth indication information indicates the PDU that is not successfully received by the network device, determine, for the terminal device based on the PDU that is not successfully received, to delete a first PDU.

The apparatus 600 corresponds to the terminal device in the method embodiments. The apparatus 600 may be the terminal device in the method embodiments, or a chip or a functional module inside the terminal device in the method embodiments. Corresponding units of the apparatus 600 are configured to perform corresponding steps performed by the terminal device in the method embodiments shown in FIG. 3 and FIG. 5. The processing unit 630 in the apparatus 600 is configured to perform corresponding steps related to processing of the terminal device in the method embodiments, for example, perform step S330 in FIG. 3, or perform step S530 in FIG. 5. The receiving unit 610 in the apparatus 600 is configured to perform the receiving step of the terminal device in the method embodiments, for example, perform step S520 in FIG. 5. The sending unit 620 in the apparatus 600 is configured to perform the sending steps of the terminal device in the method embodiments, for example, perform steps S311 and S310 in FIG. 3.

The processing unit 630 may be at least one processor. The sending unit 620 may be a transmitter or an interface circuit, and the receiving unit 610 may be a receiver or an interface circuit. The receiver and the transmitter may be integrated to form a transceiver or an interface circuit.

Optionally, the apparatus 600 may further include a storage unit, configured to store data and/or signaling. The processing unit 630, the sending unit 620, and the receiving unit 610 may interact with or be coupled to the storage unit, for example, read or invoke the data and/or signaling in the storage unit, so that the method in the foregoing embodiments is performed.

The foregoing units may independently exist, or may be completely or partially integrated.

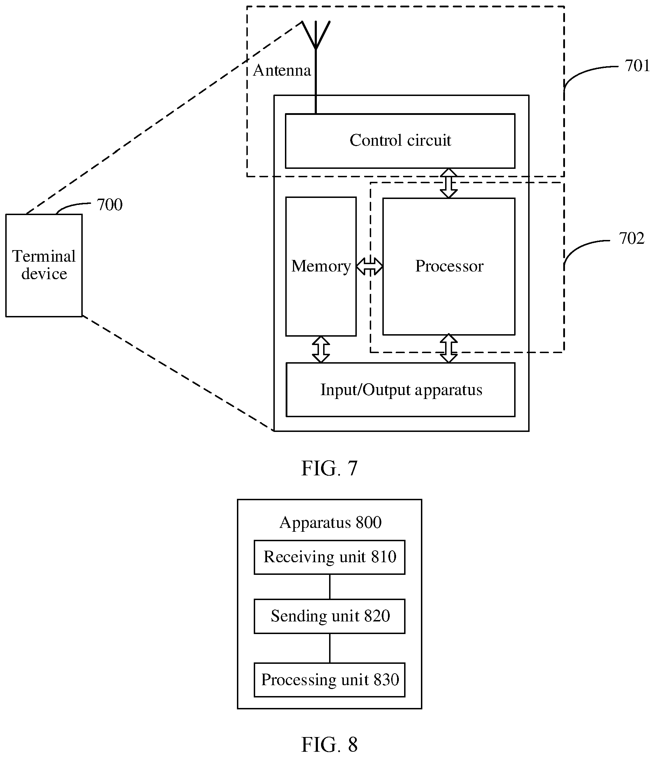

For example, FIG. 7 is a diagram of a structure of a terminal device according to this application. The terminal device 700 may be applied to the system shown in FIG. 1. For ease of description, FIG. 7 shows only main components of the terminal device. As shown in FIG. 7, the terminal device 700 includes a processor, a memory, a control circuit, an antenna, and an input/output apparatus. The processor is configured to control the antenna and the input/output apparatus to send or receive a signal. The memory is configured to store a computer program. The processor is configured to invoke the computer program from the memory and run the computer program, to perform a corresponding procedure and/or operation performed by the terminal device in the communication method provided in this application. Details are not described herein.

For example, FIG. 8 is a diagram of another communication apparatus according to this application. As shown in FIG. 8, the apparatus 800 includes a receiving unit 810, a sending unit 820, and a processing unit 830.

In an example, the receiving unit 810 is configured to receive first indication information from a terminal device, where the first indication information indicates a second protocol data unit set PDU set referenced by a first PDU set.

The processing unit 830 is configured to: when determining that the second PDU set is not successfully received, determine, for a network device, not to schedule the first PDU set.

In another example, the receiving unit 810 and the processing unit 830 are configured to determine fourth indication information, where the fourth indication information indicates a PDU that is successfully received by the network device and/or a PDU that is not successfully received by the network device.

The sending unit 820 is configured to send, for the apparatus 800, the fourth indication information to the terminal device when a first condition is satisfied.

The apparatus 800 corresponds to the network device in the method embodiments. The apparatus 800 may be the network device in the method embodiments, or a chip or a functional module inside the network device in the method embodiments. Corresponding units of the apparatus 800 are configured to perform corresponding steps performed by the network device in the method embodiments shown in FIG. 3 and FIG. 5. The processing unit 830 in the apparatus 800 is configured to perform corresponding steps related to processing in the network device in the method embodiments, for example, perform steps S312 and S320 in FIG. 3, or perform step S510 in FIG. 5. The sending unit 820 in the apparatus 800 is configured to perform a sending-related step of the network device, for example, step S520 in FIG. 5. The receiving unit 810 in the apparatus 800 is configured to perform receiving steps of the network device in the method embodiments, for example, perform steps S311 and S310 in FIG. 3.

The receiving unit 810 and the sending unit 820 may form a transceiver unit, which has both receiving and sending functions. The processing unit 830 may be at least one processor. The sending unit may be a transmitter or an interface circuit. The receiving unit may be a receiver or an interface circuit. The receiver and the transmitter may be integrated to form a transceiver or an interface circuit.

Optionally, the apparatus 800 may further include a storage unit, configured to store data and/or signaling. The processing unit 830, the sending unit 820, and the receiving unit 810 may interact with or be coupled to the storage unit, for example, read or invoke the data and/or signaling in the storage unit, so that the method in the foregoing embodiments is performed.

The foregoing units may independently exist, or may be completely or partially integrated.

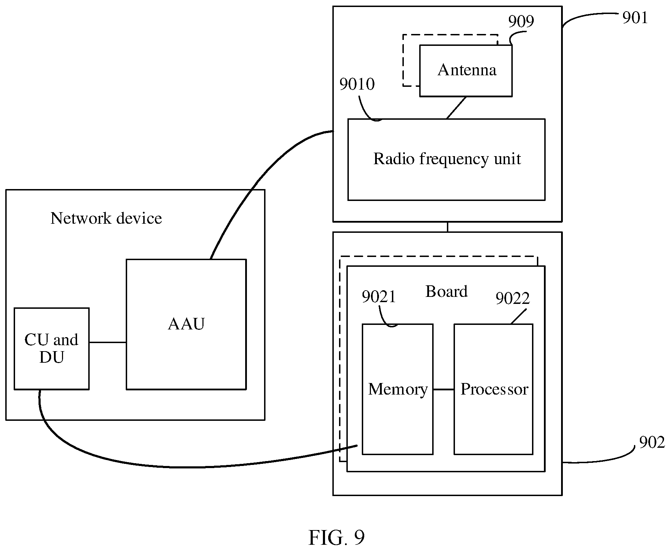

FIG. 9 is a diagram of a structure of a network device according to this application. The network device may be configured to implement functions of the network device in the foregoing communication method.

In a possible manner, for example, in some implementation solutions in a 5G communication system, the network device 900 may include a central unit (central unit, CU), a distributed unit (distributed unit, DU), and an active antenna unit (active antenna unit, AAU). In comparison with an access network device that is in an LTE communication system and that includes one or more radio frequency units, for example, a remote radio unit (remote radio unit, RRU) 9010 and one or more baseband units (baseband units, BBUs), a non-real-time part of the original BBU is split and redefined as the CU, which is responsible for processing a non-real-time protocol and service. Some physical layer processing functions of the BBU are combined with the original RRU and a passive antenna into the AAU. The remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, DU, and AAU may be separated or integrated. Therefore, there are a plurality of network deployment forms. A possible deployment form is consistent with that of a conventional 4G access network device, and the CU and the DU are deployed on same hardware. It should be understood that FIG. 9 is merely an example, and does not limit the protection scope of this application. For example, the deployment form may alternatively be that the DU is deployed in a 5G BBU equipment room, the CU is deployed in a centralized manner or the DU is deployed in a centralized manner, the CU is centralized at a higher level, or the like.

The AAU 901 may implement a transceiver function, and is referred to as a transceiver unit. Optionally, the transceiver unit may also be referred to as a transceiver machine, a transceiver circuit, a transceiver, or the like, and may include at least one antenna 909 and a radio frequency unit 9010. Optionally, the transceiver unit may include a receiving unit and a sending unit. The receiving unit may correspond to a receiver (which may also be referred to as a receiver machine or a receiver circuit), and the sending unit may correspond to a transmitter (which may also be referred to as a transmitter machine or a transmitter circuit). The CU and the DU 902 may implement an internal processing function, and are referred to as a processing unit. Optionally, the processing unit may control the access network device or the like, and may be referred to as a controller. The AAU 901, the CU, and the DU 902 may be physically disposed together, or may be physically disposed separately.

In addition, the access network device is not limited to the form shown in FIG. 9, and may alternatively be in another form. For example, the access network device includes a BBU and an ARU, or includes a BBU and an AAU, or may be CPE, or may be in another form. This is not limited in this application.

It should be understood that the network device 900 shown in FIG. 9 can implement the network device in the method embodiments in FIG. 5 and FIG. 7. Operations and/or functions of units in the network device 900 are separately for implementing corresponding procedures performed by the network device in the method embodiments of this application. Details are not described herein. The structure of the network device shown in FIG. 9 is merely a possible form, and should not constitute any limitation on embodiments of this application. This application does not exclude a possibility that there may be a network device structure in another form in the future.

An embodiment of this application further provides a communication system, including the foregoing terminal device and the foregoing network device.

This application further provides a computer-readable storage medium. The computer-readable storage medium stores instructions, and when the instructions are run on a computer, the computer is enabled to perform the steps performed by the terminal device or the network device in the methods shown in FIG. 3 and FIG. 5.

This application further provides a computer program product including instructions. When the computer program product runs on a computer, the computer is enabled to perform the steps performed by the terminal device or the network device in the methods shown in FIG. 3 and FIG. 5.

This application further provides a chip, including a processor. The processor is configured to read and run a computer program stored in a memory, to perform a corresponding operation and/or procedure performed by the terminal device or the network device in the communication method provided in this application. The chip may alternatively be replaced with a chip system, and details are not described herein again.

The terms "include", "have", and any other variant thereof in this application are intended to cover a non-exclusive inclusion. For example, processes, methods, systems, products, or devices that include a series of steps or units are not necessarily limited to the steps or the units that are clearly listed, but may include other steps or units that are not clearly listed or that are inherent to the processes, methods, products, or devices.

A person skilled in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that this implementation goes beyond the scope of this application.

In several embodiments provided in this application, it should be understood that the disclosed system, apparatus, and method may be implemented in other manners. For example, the described apparatus embodiment is merely an example. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual conditions to achieve the objectives of the solutions in embodiments. In addition, functional units in embodiments of this application may be integrated into one processing unit, or each of the units may exist alone physically, or two or more units may be integrated into one unit.

Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, and/or in this application indicates that there are three relationships. For example, A and/or B indicate the following cases: Only A exists, both A and B exist, and only B exists. In addition, the character / in this specification represents or. In this application, at least one represents one and at least two (including two).

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
reporting, by a terminal device, first indication information to a network device, wherein the first indication information indicates a second protocol data unit set, PDU set, referenced by a first PDU set; and
determining, by the terminal device based on at least one of a timeout status of a timer of the terminal device or a feedback status of the network device for the first indication information, whether the second PDU set is successfully uploaded, wherein
the first PDU set comprises a PDU set to be sent by the terminal device, and the second PDU set comprises a PDU set that has been sent by the terminal device; and that the first PDU set references the second PDU set indicates that successful decoding of the first PDU set is premised on successful decoding of the second PDU set.

2. The method according to claim 1, wherein the first indication information comprises a media access control control element MAC CE, and the MAC CE comprises a logical channel identifier LCID and an identifier of the second PDU set, wherein the LCID indicates a logical channel corresponding to the MAC CE, and the logical channel is for transmission of the identifier of the second PDU set referenced by the first PDU set.

3. The method according to claim 1 or 2, wherein when it is determined that the second PDU set is not successfully uploaded, the method further comprises: discarding, by the terminal device, the first PDU set.

4. The method according to claim 3, wherein the discarding, by the terminal device, the first PDU set comprises:
when a first timer expires, if the first PDU set is buffered in a buffer of the terminal device, discarding the first PDU set in the buffer, wherein
the first timer is a discard timer set by the terminal device for the first PDU set, a start moment of the first timer is a moment at which a packet data convergence protocol PDCP entity of the terminal device receives a last bit of a last PDU in the first PDU set, timing duration of the first timer is less than a frame arrival periodicity, and the frame arrival periodicity indicates an interval between arrival of two adjacent frames at the buffer.

5. The method according to claim 1 or 2, wherein when it is determined that the second PDU set is successfully uploaded, the method further comprises:
discarding, by the terminal device, a part of PDUs in the first PDU set; or
sending, by the terminal device, the first PDU set.

6. The method according to claim 5, wherein the discarding, by the terminal device, a part of PDUs in the first PDU set comprises:
when a first timer expires, if the part of PDUs in the first PDU set are buffered in a buffer of the terminal device, discarding the part of PDUs in the first PDU set in the buffer, wherein
the first timer is a discard timer set by the terminal device for the first PDU set, and a start moment of the first timer is a moment at which a packet data convergence protocol PDCP entity of the terminal device receives a last bit of a last PDU in the first PDU set.

7. The method according to claim 4 or 6, wherein the buffer of the terminal device comprises:
a buffer at a radio link control RLC layer of the terminal device and/or a buffer at a packet data convergence protocol PDCP layer of the terminal device.

8. The method according to any one of claims 1 to 7, wherein the determining, by the terminal device based on a feedback status of the network device for the first indication information, that the second PDU set is not successfully uploaded comprises:
receiving, by the terminal device, second indication information from the network device, wherein the second indication information indicates that the second PDU set is not successfully uploaded.

9. The method according to any one of claims 1 to 8, wherein the determining, by the terminal device based on a timeout status of a timer of the terminal device, that the second PDU set is not successfully uploaded comprises:
starting, by the terminal device, a second timer when sending the first indication information, and if the second timer expires and the terminal device does not receive scheduling information from the network device, determining, by the terminal device, that the second PDU set is not successfully uploaded.

10. The method according to any one of claims 1 to 9, wherein before the reporting, by a terminal device, first indication information, the method further comprises:
sending, by the terminal device, the second PDU set to the network device, wherein the second PDU set comprises third indication information, and the third indication information is provided for the network device to determine whether all PDUs in the second PDU set or a specified quantity of PDUs in the second PDU set are successfully received.

11. The method according to claim 10, wherein the third indication information comprises at least one of the following:
identifiers of a 1^{st} PDU and a last PDU comprised in the second PDU set;
a total quantity of PDUs comprised in the second PDU set;
a quantity of successfully communicated PDUs needed for the successful decoding of the second PDU set;
a ratio of a quantity of successfully communicated PDUs needed for the successful decoding of the second PDU set to a total quantity of PDUs comprised in the second PDU set;
an identifier indicating that a PDU comprised in the second PDU set belongs to the second PDU set; or
a sequence number of a PDU comprised in the second PDU set in the second PDU set.

12. The method according to any one of claims 1 to 11, wherein the method further comprises:
when or after receiving the first PDU set generated by an application layer of the terminal device, performing, by a protocol layer entity of the terminal device, header detection on the first PDU set, to determine an identifier of the first PDU set and an identifier of at least one PDU set referenced by the first PDU set; and
encapsulating, by a protocol layer of the terminal device, the identifier of the first PDU set and the identifier of the at least one PDU set into a header of the protocol layer of the first PDU set, wherein
a 1^{st} PDU or each PDU in the first PDU set comprises the identifier of the first PDU set and the identifier of the at least one referenced PDU set, and the second PDU set is one of the at least one PDU set.

13. The method according to claim 12, wherein the protocol layer comprises at least one of the following:
a service data adaptation protocol SDAP layer, the packet data convergence protocol PDCP layer, a non-access stratum NAS, or a radio resource control RRC layer.

14. A communication method, comprising:
receiving, by a network device, first indication information from a terminal device, wherein the first indication information indicates a second protocol data unit set PDU set referenced by a first PDU set; and
when the network device determines that not all PDUs needed for successful decoding of the second PDU set are successfully received, determining, by the network device, not to schedule the first PDU set, wherein
the first PDU set comprises a PDU set to be sent by the terminal device, the second PDU set comprises a PDU set that is referenced by the first PDU set and that has been sent by the terminal device, and that the first PDU set references the second PDU set indicates that successful decoding of the first PDU set is premised on the successful decoding of the second PDU set.

15. The method according to claim 14, wherein when the network device determines that the second PDU set is successfully received, the method further comprises:
sending, by the network device, scheduling information to the terminal device, wherein the scheduling information is for scheduling the first PDU set.

16. The method according to claim 14 or 15, wherein the first indication information comprises a media access control control element MAC CE, and the MAC CE comprises a logical channel identifier LCID and an identifier of the second PDU set, wherein
the LCID indicates a logical channel corresponding to the MAC CE, and the logical channel is for transmission of the identifier of the second PDU set referenced by the first PDU set.

17. The method according to any one of claims 14 to 16, wherein the determining, by the network device, that not all PDUs needed for successful decoding of the second PDU set are successfully received comprises: determining, by the network device, that the network device does not store the identifier of the second PDU set.

18. The method according to any one of claims 14 to 17, wherein the method further comprises:
receiving, by the network device, the second PDU set from the terminal device, wherein the second PDU set comprises third indication information; and
determining, by the network device based on the third indication information, whether to store the identifier of the second PDU set.

19. The method according to claim 18, wherein the third indication information comprises at least one of the following:
identifiers of a 1^{st} PDU and a last PDU comprised in the second PDU set;
a total quantity of PDUs comprised in the second PDU set;
a quantity of successfully communicated PDUs needed for the successful decoding of the second PDU set;
a ratio of a quantity of successfully communicated PDUs needed for the successful decoding of the second PDU set to a total quantity of PDUs comprised in the second PDU set;
an identifier indicating that a PDU comprised in the second PDU set belongs to the second PDU set; or
a sequence number of a PDU comprised in the second PDU set in the second PDU set.

20. The method according to any one of claims 14 to 19, wherein after the determining, by the network device, not to schedule the first PDU set, the method further comprises:
sending, by the network device, second indication information to the terminal device, wherein the second indication information indicates that the network device does not successfully receive all the PDUs needed for the successful decoding of the second PDU set.

21. The method according to claim 20, wherein before the sending, by the network device, second indication information to the terminal device, the method further comprises:
determining, by the network device, that timing duration of a first timer is greater than a frame arrival periodicity, wherein
the first timer is a discard timer set by the terminal device for the first PDU set, a start moment of the first timer is a moment at which a packet data convergence protocol PDCP entity of the terminal device receives the first PDU set, and the frame arrival periodicity indicates an interval between arrival of two adjacent frames at a buffer of the terminal device.

22. The method according to claim 20 or 21, wherein that the second indication information indicates that the network device does not successfully receive all the PDUs needed for the successful decoding of the second PDU set comprises:
the second indication information comprises an identifier of at least one PDU set, and indicates that the at least one PDU set is not successfully uploaded, and the second PDU set is one of the at least one PDU set.

23. A communication method, comprising:
determining, by a network device, that a first condition is satisfied; and
sending, by the network device, fourth indication information to a terminal device, wherein the fourth indication information indicates a PDU that is successfully received by the network device and/or a PDU that is not successfully received by the network device; and
the first condition comprises at least one of the following: the fourth indication information is periodically sent information and a moment of sending the fourth indication information arrives, the network device determines whether a third PDU set is successfully received, or the network device receives trigger information from the terminal device, wherein
the trigger information is for triggering the network device to determine the fourth indication information.

24. The method according to claim 23, wherein when the first condition is that the network device determines whether the third PDU set is successfully received, the method further comprises:
receiving, by the network device, the third PDU set from the terminal device, wherein the third PDU set comprises fifth indication information; and
determining, by the network device based on the fifth indication information, whether all PDUs needed for successful decoding of the third PDU set are successfully received.

25. The method according to claim 24, wherein the fifth indication information comprises at least one of the following:
identifiers of a 1^{st} PDU and a last PDU comprised in the third PDU set;
a total quantity of PDUs comprised in the third PDU set;
a quantity of successfully communicated PDUs needed for the successful decoding of the third PDU set;
a ratio of a quantity of successfully communicated PDUs needed for the successful decoding of the third PDU set to a total quantity of PDUs comprised in the third PDU set;
an identifier indicating that a PDU comprised in the third PDU set belongs to the third PDU set; or
a sequence number of a PDU comprised in the third PDU set in the third PDU set.

26. The method according to claim 24 or 25, wherein the determining, by the network device based on the fifth indication information, whether all PDUs comprised in the third PDU set are successfully received comprises: determining, by the network device based on the fifth indication information, that a part of PDUs in the third PDU set are received, and all the PDUs comprised in the third PDU set are not successfully received; and
the method further comprises: discarding, by the network device, the part of PDUs in the third PDU set.

27. A communication method, comprising:
receiving, by a terminal device, fourth indication information from a network device, wherein the fourth indication information indicates a PDU that is successfully received by the network device and/or a PDU that is not successfully received by the network device; and
when the fourth indication information indicates the PDU that is not successfully received by the network device, determining, by the terminal device based on the PDU that is not successfully received, to discard a first PDU, wherein the PDU that is not successfully received is a PDU in a third PDU set, and
the first PDU comprises at least one of the following:
a PDU comprised in a fourth PDU set, a PDU that is not communicated in the third PDU set, or a PDU comprised in a fifth PDU set, wherein
the fourth PDU set is a PDU set that references the third PDU set, the fifth PDU set is a PDU set that references the third PDU set and/or the fourth PDU set, and that the fourth PDU set references the third PDU set indicates that successful decoding of the fourth PDU set is premised on successful decoding of the third PDU set; and that the fifth PDU set references the third PDU set and/or the fourth PDU set indicates that successful decoding of the fifth PDU set is premised on the successful decoding of the third PDU set and/or the fourth PDU set.

28. The method according to claim 27, wherein before the terminal device receives third indication information from the network device, the method further comprises:
sending, by the terminal device, the third PDU set to the network device, wherein the third PDU set comprises fifth indication information, and the fifth indication information is provided for the network device to determine whether the third PDU set is successfully received.

29. The method according to claim 28, wherein the fifth indication information comprises at least one of the following:
identifiers of a 1^{st} PDU and a last PDU comprised in the third PDU set;
a total quantity of PDUs comprised in the third PDU set;
a quantity of successfully communicated PDUs needed for the successful decoding of the third PDU set;
a ratio of a quantity of successfully communicated PDUs needed for the successful decoding of the third PDU set to a total quantity of PDUs comprised in the third PDU set;
an identifier indicating that a PDU comprised in the third PDU set belongs to the third PDU set; or
a sequence number of a PDU comprised in the third PDU set in the third PDU set.

30. The method according to any one of claims 27 to 29, wherein the method further comprises:
before or when the third PDU set is buffered into a buffer,
performing, by the terminal device, header detection on the third PDU set generated by an application layer, to determine an identifier of the third PDU set and an identifier of at least one PDU set referenced by the third PDU set; and
encapsulating, by the terminal device, the identifier of the third PDU set and the identifier of the at least one PDU set into a header of a protocol layer of the third PDU set, wherein
the 1^{st} PDU or each PDU in the third PDU set comprises the identifier of the third PDU set and the identifier of the at least one PDU set, and the successful decoding of the third PDU set is premised on successful decoding of the at least one PDU set.

31. A communication system, comprising a terminal device and a network device, wherein the terminal device is configured to perform the method according to any one of claims 1 to 13, and the network device is configured to perform the method according to any one of claims 14 to 22; or
the terminal device is configured to perform the method according to any one of claims 27 to 30, and the network device is configured to perform the method according to any one of claims 23 to 26.

32. A computer-readable storage medium, wherein the computer-readable storage medium stores computer instructions, and when the computer instructions are run on a terminal device, the terminal device is enabled to perform the method according to any one of claims 1 to 30.

33. A computer program product, comprising instructions, wherein when the computer instructions are run on a network device, the network device is enabled to perform the method according to any one of claims 1 to 30.
